(19) Europäisches Patentamt
European Patent Office
Office européen des brevets

(11) EP 3 950 149 A1

(12) **EUROPEAN PATENT APPLICATION**
published in accordance with Art. 153(4) EPC

(43) Date of publication:
**09.02.2022 Bulletin 2022/06**

(21) Application number: **20783976.2**

(22) Date of filing: **18.03.2020**

(51) International Patent Classification (IPC):
***B05D 3/10*** *(2006.01)* ***C09D 5/44*** *(2006.01)*
***C09D 163/00*** *(2006.01)* ***C09D 175/02*** *(2006.01)*
***B32B 15/092*** *(2006.01)* ***C09D 7/63*** *(2018.01)*

(52) Cooperative Patent Classification (CPC):
**B05D 3/10; B32B 15/092; C09D 5/44; C09D 7/63; C09D 163/00; C09D 175/02**

(86) International application number:
**PCT/JP2020/012049**

(87) International publication number:
**WO 2020/203311 (08.10.2020 Gazette 2020/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.03.2019 JP 2019065671**
**29.03.2019 JP 2019066339**

(71) Applicant: **Kansai Paint Co., Ltd**
**Amagasaki-shi, Hyogo 661-8555 (JP)**

(72) Inventors:
- **NAGAI, Akinori**
**Hiratsuka-shi, Kanagawa 254-8562 (JP)**
- **KIMURA, Tomoya**
**Hiratsuka-shi, Kanagawa 254-8562 (JP)**
- **MATSUNAGA, Kenichiro**
**Hiratsuka-shi, Kanagawa 254-8562 (JP)**

(74) Representative: **Müller-Boré & Partner Patentanwälte PartG mbB**
**Friedenheimer Brücke 21**
**80639 München (DE)**

# (54) CATIONIC ELECTRODEPOSITION COATING MATERIAL COMPOSITION

(57) This invention provides a cationic electrodeposition paint composition comprising an amino-group-containing epoxy resin (A), a blocked polyisocyanate compound (B), and a modified imidazole (C) having a specific structure, wherein the cationic electrodeposition paint composition satisfies the following (i) or (ii), or both: (i) the cationic electrodeposition paint composition further comprises a rust inhibitor (D) or (ii) a blocking agent (b-2) of the blocked polyisocyanate compound (B) is an oxime-based compound (b-2-1) and/or a pyrazole-based compound (b-2-2).

EP 3 950 149 A1

**Description**

Technical Field

Cross-Reference to Related Patent Applications

The present application claims priority to the specification of Japanese Patent Application No. 2019-065671 and the specification of Japanese Patent Application No. 2019-066339, both filed on March 29, 2019 (the entire disclosures of which are incorporated in the present specification by reference). The present invention relates to a cationic electrodeposition paint composition.

Background Art

Cationic electrodeposition paints have excellent application workability, and form a coating film with excellent corrosion resistance. They have thus been widely used for, for example, automobile parts, electrical equipment parts, and other industrial machinery for which such properties are required.

In general, cationic electrodeposition paint compositions comprise resin components comprising a cationic resin (e.g., an amino-group-containing epoxy resin) and a curing agent (also called a "crosslinking agent"; e.g., a blocked polyisocyanate compound), and a pigment dispersion paste containing a pigment dispersed with a resin for pigment dispersion. A coating film cured by cross-linking is formed by using this paint composition for a coating bath, applying a current using a substrate as a cathode and the counter electrode as an anode to form a deposited coating film on the substrate, and then heating the deposited coating film.

Although the blocked polyisocyanate compound does not react with resin at ordinary temperatures, the blocking agent dissociates when heated and regenerates isocyanate groups, allowing the crosslinking reaction with active hydrogen-containing resin to proceed. This makes it possible to provide a single-component paint with no pot life restriction; and, additionally, makes application to an active hydrogen-containing aqueous paint that contains water, alcohol, etc. as a medium possible.

Examples of compounds known as a blocking agent used in the blocked polyisocyanate compound include compounds, such as phenol-based compounds, caprolactam-based compounds, oxime-based compounds, active methylene-based compounds, and pyrazole-based compounds. As dissociation catalysts for the blocking agent, organic tin compounds, such as dibutyltin dibenzoate, dioctyltin oxide, and dibutyltin oxide, have been commonly used.

Organic tin compounds show a very high catalyst performance. However, in recent years, their toxicity has become a problem, and catalysts that replace organic tin compounds have been required. As the replacement, catalysts, such as bismuth-based catalysts and zinc-based catalysts, have been developed (PTL (Patent Literature) 1 and PTL 2).

However, conventional cationic electrodeposition paint compositions all contain a tin-based catalyst, which poses environmental problems. There have also been problems such that metal-based catalysts are costly, exert insufficient catalytic effects, and are unstable in paints.

Citation List

Patent Literature

PTL 1: JP2000-290542A
PTL 2: JP2012-152725A
PTL 3: JPH10-120947A
PTL 4: JPH07-300698A
PTL 5: JP2000-290542A

Summary of Invention

Technical Problem

The problem to be solved by the present invention is to provide a blocked polyisocyanate-based, novel cationic electrodeposition paint composition that exhibits high curability, and that is capable of forming a coating film with high corrosion resistance and excellent appearance.

Solution to Problem

As a result of extensive research to solve the above problems, the present inventors found that the problems can be solved by producing a cationic electrodeposition paint composition using an amino-group-containing epoxy resin (A), a specific blocked polyisocyanate compound (B), and a specific modified imidazole (C). Accordingly, the present invention provides the following items.

Item 1. A cationic electrodeposition paint composition comprising an amino-group-containing epoxy resin (A), a blocked polyisocyanate compound (B), and a modified imidazole (C) represented by the following Formula (1):

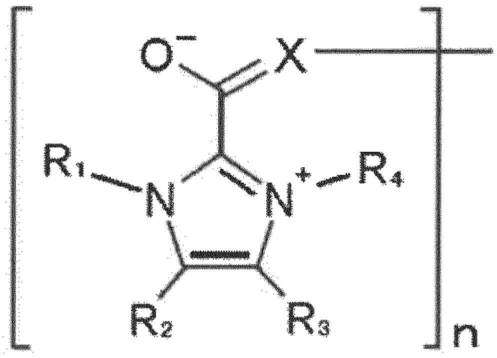

· · · Formula (1)

wherein $R_1$, $R_2$, $R_3$, and $R_4$ may be identical or different, and each represents a hydrogen atom or an organic group containing one or more carbon atoms, wherein the organic group may contain at least one member selected from the group consisting of oxygen, nitrogen, sulfur, and halogen, and two or more of $R_1$, $R_2$, $R_3$, and $R_4$, taken together with the carbon and/or nitrogen to which they are attached, may form a ring; and

X represents oxygen or nitrogen, and when X represents oxygen, Y is absent while n is 1, and when X represents nitrogen, Y represents an organic group while n is an integer of 1 or more, wherein the cationic electrodeposition paint composition satisfies the following (i) or (ii), or both:

(i) the cationic electrodeposition paint composition further comprises a rust inhibitor (D) or
(ii) a blocking agent (b-2) of the blocked polyisocyanate compound (B) is an oxime-based compound (b-2-1) and/or a pyrazole-based compound (b-2-2).

Item 2. The cationic electrodeposition paint composition according to Item 1, wherein the modified imidazole (C) is present in an amount of 0.01 to 10 mass% based on the total resin solids content of the cationic electrodeposition paint composition.

Item 3. The cationic electrodeposition paint composition according to Item 1 or 2, wherein the rust inhibitor (D) is present in an amount of 0.01 to 10 mass% based on the total resin solids content of the cationic electrodeposition paint composition.

Item 4. A method for producing a coated article, the method comprising the step of immersing a metal substrate in an electrodeposition paint bath comprising the cationic electrodeposition paint composition of any one of Items 1 to 3 to perform electrodeposition coating.

Item 5. The method according to Item 4, the method comprising the step of thermally curing a coating film obtained by electrodeposition coating.

Item 6. The method according to Item 5, wherein the thermal-curing step is performed at a temperature of 130°C or lower.

Advantageous Effects of Invention

The present invention can provide a blocked polyisocyanate-based, novel cationic electrodeposition paint composition that exhibits curability, and that achieves excellent corrosion resistance and appearance.

Description of Embodiments

The present invention relates to a cationic electrodeposition paint composition comprising an amino-group-containing epoxy resin (A), a blocked polyisocyanate compound (B), and a specific modified imidazole (C), wherein the cationic electrodeposition paint composition satisfies the following (i) or (ii), or both:

(i) the cationic electrodeposition paint composition further comprises a rust inhibitor (D) or
(ii) a blocking agent (b-2) of the blocked polyisocyanate compound (B) is an oxime-based compound (b-2-1) and/or a pyrazole-based compound (b-2-2). The details are described below.

In the present specification, examples of alkyl include linear or branched alkyl groups containing 1 to 10 carbon atoms. More specific examples of alkyl include methyl, ethyl, n-propyl, isopropyl, n-butyl, sec-butyl, isobutyl, tert-butyl, 1-methylpropyl, n-pentyl, isopentyl, tert-pentyl, n-hexyl, 1,1-dimethylpropyl, n-heptyl, n-octyl, n-nonyl, and n-decyl.

In the present specification, examples of alkenyl include linear or branched alkenyl groups containing 1 to 10 carbon atoms and at least one double bond. The number of double bonds may be, for example, one to two, or one. More specific examples of alkenyl include vinyl, allyl, 1-propenyl, 2-methyl-2-propenyl, isopropenyl, 1-butenyl, 2-pentenyl, 3-methyl-2-butenyl, 1-pentenyl, 5-hexenyl, 3-methyl-3-butenyl, 1-heptenyl, 2-octenyl, 3-nonenyl, and 1-decenyl.

In the present specification, examples of alkynyl include linear or branched alkynyl groups containing 1 to 10 carbon atoms and at least one triple bond. The number of triple bonds may be, for example, one to two, or one. More specific examples of alkynyl include ethynyl, 1-propynyl, 2-butynyl, 1-methyl-2-propynyl, 1-pentynyl, 2-hexynyl, 3-heptynyl, 2-octynyl, 4-noninyl, and 6-decinyl.

In the present specification, examples of cycloalkyl include cycloalkyl groups containing 3 to 10 carbon atoms. More specific examples of cycloalkyl include cyclopropyl, cyclobutyl, cyclopentyl, cyclohexyl, cycloheptyl, cyclooctyl, cyclononyl, and cyclodecyl.

In the present specification, examples of cycloalkylalkyl include a cycloalkylalkyl group in which a single cycloalkyl moiety, i.e., a cycloalkyl group mentioned above (cycloalkyl containing 3 to 10 carbon atoms), is attached to the alkyl moiety, i.e., an alkyl group mentioned above (e.g., linear or branched alkyl containing 1 to 10 carbon atoms). More specific examples of cycloalkylalkyl includes cyclopropylmethyl, 10-cyclopropyldecyl, 8-cyclobutylnonyl, 3-cyclopentylpropyl, cyclohexylmethyl, cycloheptylmethyl, 2-cyclooctylethyl, 2-cyclononylethyl, and cyclodecylmethyl.

In the present specification, examples of hydroxyalkyl include linear or branched alkyl groups containing 1 to 10 carbon atoms substituted with one hydroxyl group, such as hydroxymethyl, 1-hydroxyethyl, 2-hydroxyethyl, 1-hydroxypropyl, 2-hydroxypropyl, 3-hydroxypropyl, 1-hydroxybutyl, 2-hydroxybutyl, 3-hydroxybutyl, and 4-hydroxybutyl.

In the present specification, examples of alkoxy include an oxy group to which alkyl mentioned above (e.g., linear or branched alkyl containing 1 to 10 carbon atoms) is attached. More specific examples include methoxy, ethoxy, n-propoxy, isopropoxy, n-butoxy, isobutoxy, tert-butoxy, n-pentyloxy, n-isopentyloxy, n-hexyloxy, n-octyloxy, n-nonyloxy, and n-decyloxy.

In the present specification, examples of alkoxyalkyl include an alkyl group mentioned above (e.g., linear or branched alkyl containing 1 to 10 carbon atoms) that contains one or more alkoxy groups mentioned above (e.g., linear or branched alkoxy containing 1 to 10 carbon atoms). More specific examples include methoxymethyl, ethoxymethyl, decyloxymethyl, n-propoxymethyl, n-butoxymethyl, 2-methoxyethyl, 1-methoxy-n-propyl, 3-methoxy-n-propyl, 2-ethoxy-n-butyl, 4-methoxy-n-butyl, 5-methoxy-n-pentyl, 6-methoxy-n-hexyl, 7-methoxy-n-hexyl, 8-methoxy-n-octyl, 9-methoxy-n-nonyl, and 10-methoxy-n-decyl.

In the present specification, examples of thioalkoxy include a thio group to which alkyl mentioned above (e.g., linear or branched alkyl containing 1 to 10 carbon atoms) is attached. More specific examples include thiomethoxy, thioethoxy, n-thiopropoxy, thioisopropoxy, n-thiobutoxy, isothiobutoxy, tert-thiobutoxy, n-thiopentyloxy, n-isothiopentyloxy, n-thiohexyloxy, n-thiooctyloxy, n-thiononyloxy, and n-thiodecyloxy.

In the present specification, examples of thioalkoxyalkyl include an alkyl group mentioned above (e.g., linear or branched alkyl containing 1 to 10 carbon atoms) that contains one or more thioalkoxy groups mentioned above (e.g., linear or branched thioalkoxy containing 1 to 10 carbon atoms). More specific examples include thiomethoxymethyl, thioethoxymethyl, thiodecyloxymethyl, n-thiopropoxymethyl, n-thiobutoxymethyl, 2-thiomethoxyethyl, 1-thiomethoxy-n-propyl, 3-thiomethoxy-n-propyl, 2-thioethoxy-n-butyl, 4-thiomethoxy-n-butyl, 5-thiomethoxy-n-pentyl, 6-thiothiomethoxy-n-hexyl, 7-thiomethoxy-n-hexyl, 8-thiomethoxy-n-octyl, 9-thiomethoxy-n-nonyl, and 10-thiomethoxy-n-decyl.

In the present specification, examples of aryl include aryl groups containing 6 to 14 carbon atoms. More specific examples include phenyl, naphthyl, biphenylenyl, anthracenyl, phenanthryl, fluorenyl, and tetrahydronaphthyl.

In the present specification, examples of aralkyl include an alkyl group mentioned above containing one or more aryl groups mentioned above. More specific examples include benzyl, phenethyl, diphenylmethyl, triphenylmethyl, naphthylmethyl, and fluorenylmethyl.

In the present specification, examples of heterocyclic groups include a monocyclic or polycyclic, saturated or unsaturated heterocyclic group containing one or more (e.g., 1 to 3) heteroatoms selected from the group consisting of nitrogen, oxygen, and sulfur. More specific examples include morpholino, pyrrolidinyl, piperidino, piperazinyl, tetrahydrofuranyl, tetrahydropyranyl, tetrahydrothiophenyl, thiazolidinyl, oxazolidinyl, imidazolyl, pyrrolyl, thienyl, furyl, oxazolyl, isoxazolyl, thiazolyl, isothiazolyl, thiadiazolyl, pyrazolyl, pyrazolyl, tetrazolyl, pyridyl, pyrazyl, pyrimidinyl, pyridazinyl, indolyl, isoindolyl, indazolyl, triazolopyridyl, benzimidazolyl, benzoxazolyl, benzothiazolyl, benzothienyl, benzofuranyl, quinolyl, isoquinolyl, quinazolinyl, quinoxalinyl, methylenedioxyphenyl, dihydrothiazolyl, and benzothiophenyl.

In the present specification, examples of mono- or di-alkylamino include an amino group to which one or two alkyl groups mentioned above are attached. More specific examples include N-methylamino, N,N-diethylamino, N-methyl-N-ethylamino, N,N-di-n-propylamino, N,N-diisopropyl, N,N-di-n-butylamino, N-sec-butylamino, N-isobutylamino, N-tert-butylamino, N,N-di-1-methylpropylamino, N,N-di-n-pentylamino, N,N-di-isopentylamino, N-tert-pentylamino, N,N-di-n-hexylamino, N-1,1-dimethylpropylamino, N,N-di-n-heptylamino, N,N-di-n-octylamino, N,N-di-2-ethylhexylamino, N,N-di-n-nonylamino, and N,N-di-n-decylamino.

In the present specification, examples of mono- or di-alkylcarbamoylamino include an amino group to which one carbamoyl group containing one or two alkyl groups mentioned above are attached. More specific examples include (N-methylcarbamoyl)amino, N,N-diethylcarbamoylamino, (N-methyl-N-ethylcarbamoyl)amino, N,N-di-n-propylcarbamoylamino, N,N-diisopropylcarbamoylamino, N,N-din-butylcarbamoylamino, (N-sec-butylcarbamoyl)amino, (N-isobutylcarbamoyl)amino, (N-tert-butyl)carbamoylamino, N,N-di-1-methylpropylcarbamoylamino, N,N-di-n-pentylcarbamoylamino, N,N-di-isopentylcarbamoylamino, (N-tert-pentylcarbamoyl)amino, N,N-di-n-hexylcarbamoylamino, N-1,1-dimethylpropylcarbamoylamino, N,N-di-n-heptylcarbamoylamino, N,N-di-n-octylcarbamoylamino, N,N-di-2-ethylhexylcarbamoylamino, N,N-di-n-nonylcarbamoylamino, and N,N-di-n-decylcarbamoylamino.

<u>Amino-Group-containing Epoxy Resin (A)</u>

Examples of the amino-group-containing epoxy resin (A) include (1) adducts of an epoxy resin with primary mono- and polyamines, secondary mono- and polyamines, or primary and secondary mixed polyamines (see, for example, U.S. Patent No. 3,984,299), (2) adducts of an epoxy resin with secondary mono- and polyamines containing a ketimine-blocked primary amino group (see, for example, U.S. Patent No. 4,017,438), and (3) reaction products obtained by etherifying an epoxy resin and a hydroxy compound containing a ketiminated primary amino group (see, for example, JPS59-043013A).

The epoxy resin used for producing the amino-group-containing epoxy resin (A) is a compound having at least one epoxy group, and preferably two or more epoxy groups, per molecule. The molecular weight is preferably such that the epoxy resin has a number average molecular weight of at least 300, preferably 400 to 4000, and more preferably 800 to 2500; and has an epoxy equivalent of at least 160, preferably 180 to 2500, and more preferably 400 to 1500. Examples of such epoxy resins for use include those obtained by reacting a polyphenol compound with epihalohydrin (such as epichlorohydrin).

Examples of polyphenol compounds that can be used for forming the epoxy resin include bis(4-hydroxyphenyl)-2,2-propane (bisphenol A), bis(4-hydroxyphenyl)methane (bisphenol F), bis(4-hydroxycyclohexyl)methane (hydrogenated bisphenol F), 2,2-bis(4-hydroxycyclohexyl)propane (hydrogenated bisphenol A), 4,4'-dihydroxybenzophenone, bis(4-hydroxyphenyl)-1,1-ethane, bis(4-hydroxyphenyl)-1,1-isobutane, bis(4-hydroxy-3-tert-butyl-phenyl)-2,2-propane, bis(2-hydroxynaphthyl)methane, tetra(4-hydroxyphenyl)-1,1,2,2-ethane, 4,4'-dihydroxydiphenylsulfone, phenol novolac, and cresol novolac.

As the epoxy resin obtained by a reaction between a polyphenol compound and epihalohydrin, resins derived from bisphenol A and represented by the following formula:

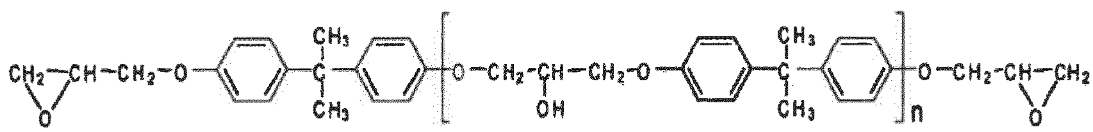

wherein n = 0 to 8,
are preferable.

Examples of commercially available products of the epoxy resin include products sold under the trade names of jER828EL, jER1002, jER1004, and jER1007 by Mitsubishi Chemical Corporation.

The epoxy resin for use may contain a polyalkylene oxide chain in the resin skeleton. Such epoxy resins can be typically obtained by (a) a method comprising reacting an epoxy resin having at least one epoxy group, preferably two or more epoxy groups with alkylene oxide or polyalkylene oxide to introduce a polyalkylene oxide chain; (β) a method comprising reacting a polyphenol compound mentioned above with polyalkylene oxide having at least one epoxy group, preferably two or more epoxy groups to introduce a polyalkylene oxide chain; or the like. Epoxy resins originally containing polyalkylene oxide chains may also be used (see, for example, JPH08-337750A).

The alkylene group in a polyalkylene oxide chain is preferably an alkylene group containing 2 to 8 carbon atoms, more preferably an ethylene group, a propylene group, or a butylene group, and particularly preferably a propylene group.

As a constituent of polyalkylene oxide, the content of the polyalkylene oxide chain is usually 1.0 to 15 mass%,

preferably 2.0 to 9.5 mass%, and more preferably 3.0 to 8.0 mass%, based on the solids mass content of the amino-group-containing epoxy resin from the standpoint of improved paint stability, appearance, and corrosion resistance.

Examples of the primary mono- and polyamines, secondary mono- and polyamines, or primary and secondary mixed polyamines mentioned above in (1) as materials used for producing the amino-group-containing epoxy resin (A) include mono- or di-alkylamines, such as monomethylamine, dimethylamine, monoethylamine, diethylamine, monoisopropylamine, diisopropylamine, monobutylamine, and dibutylamine; alkanolamines, such as monoethanolamine, diethanolamine, mono(2-hydroxypropyl)amine, and monomethylaminoethanol; and alkylene polyamines, such as ethylenediamine, propylenediamine, butylenediamine, hexamethylenediamine, diethylenetriamine, and triethylenetetramine.

Examples of the secondary mono- and polyamines containing a ketimine-blocked primary amino group mentioned above in (2) as materials used for producing the amino-group-containing epoxy resin (A) include ketiminated products obtained by reacting a ketone compound with, for example, diethylenetriamine, among the primary and secondary mixed polyamines mentioned above in (1) as materials used for producing the amine-added epoxy resin.

Examples of the hydroxy compound containing a ketiminated primary amino group mentioned above in (3) as a material used for producing the amino-group-containing epoxy resin (A) include hydroxy-containing ketiminated products obtained by reacting a ketone compound with a primary-amino-group- and hydroxy-containing compound, such as monoethanolamine or mono(2-hydroxypropyl)amine, among the primary mono- and polyamines, secondary mono- and polyamines, and primary and secondary mixed polyamines, mentioned above in (1) as materials used for producing the amino-group-containing epoxy resin (A).

The amine value of the amino-group-containing epoxy resin (A) is preferably 30 to 80 mg KOH/g, and more preferably 40 to 70 mg KOH/g, based on the resin solids, from the standpoint of improved water dispersibility and corrosion resistance.

The amino-group-containing epoxy resin (A) may be optionally modified with a modifier. The modifier is not particularly limited as long as it is a resin or compound that is reactive with an epoxy resin. Examples of usable modifiers include polyols, polyether polyols, polyester polyols, polyamidoamines, polycarboxylic acids, and fatty acids; polyisocyanate compounds and compounds obtained by reacting polyisocyanate compounds; lactone compounds such as ε-caprolactone; acrylic monomers and compounds obtained by polymerization reaction of acrylic monomers; xylene formaldehyde compounds; and epoxy compounds. These modifiers can be used alone, or in a combination of two or more.

Of these, from the standpoint of, in particular, throwing power and/or corrosion resistance, the modifier for use is preferably at least one saturated and/or unsaturated fatty acid. Usable fatty acids are preferably long-chain fatty acids with 8 to 22 carbon atoms. Examples include caprylic acid, capric acid, octanoic acid, nonanoic acid, decanoic acid, lauric acid, myristic acid, pentadecyl acid, palmitic acid, margaric acid, stearic acid, oleic acid, linoleic acid, and linolenic acid. Of these, long-chain fatty acids with 10 to 20 carbon atoms are preferable, and long-chain fatty acids with 13 to 18 carbon atoms are more preferable.

The addition reaction of an amine compound mentioned above and the modifier to the epoxy resin can usually be performed in a suitable solvent at a temperature of about 80 to 170°C, and preferably about 90 to 150°C for about 1 to 6 hours, and preferably about 1 to 5 hours.

Examples of the solvent include hydrocarbon solvents such as toluene, xylene, cyclohexane, and n-hexane; ester solvents such as methyl acetate, ethyl acetate, and butyl acetate; ketone solvents such as acetone, methyl ethyl ketone, methyl isobutyl ketone, and methyl amyl ketone; amide solvents such as dimethylformamide and dimethylacetamide; alcohol solvents such as methanol, ethanol, n-propanol, and iso-propanol; ether alcohol compounds such as ethylene glycol monobutyl ether and diethylene glycol monoethyl ether; and mixtures thereof.

The amount of the modifier used is not strictly limited, and can be suitably changed, for example, according to the intended use of the paint composition. From the standpoint of improved appearance and corrosion resistance, it is suitable that the amount of the modifier is usually 0 to 50 mass%, preferably 3 to 30 mass%, and more preferably 6 to 20 mass%, based on the solids mass content of the amino-group-containing epoxy resin.

Blocked Polyisocyanate Compound (B)

The blocked polyisocyanate compound (B) refers to a product generated through an addition reaction of a polyisocyanate compound (b-1) with a blocking agent (b-2). An active hydrogen-containing compound other than the blocking agent (b-2) may be optionally used and reacted, together with the blocking agent (b-2), with the polyisocyanate compound (b-1).

As the polyisocyanate compound (b-1), a known polyisocyanate compound can be used. Examples include tolylene diisocyanate, xylylene diisocyanate, phenylene diisocyanate, diphenylmethane-2,2'-diisocyanate, diphenylmethane-2,4'-diisocyanate, diphenylmethane-4,4'-diisocyanate, crude MDI [polymethylene polyphenyl isocyanate], bis(isocyanatemethyl)cyclohexane, tetramethylene diisocyanate, hexamethylene diisocyanate, methylene diisocyanate, isophorone diisocyanate, and like aromatic, aliphatic, or alicyclic polyisocyanate compounds; cyclopolymers or biurets of these polyisocyanate compounds; and combinations thereof.

The blocking agent (b-2) is added to the isocyanate groups of the polyisocyanate compound (b-1) to block the isocyanate groups. The blocked polyisocyanate compound (B) produced through the addition is stable at ordinary temperatures. When heated, however, to a temperature at which coating films are baked (for example, about 80 to 200°C), it is desirable that the blocking agent dissociates to regenerate free isocyanate groups.

Examples of the blocking agent (b-2) include oxime-based compounds, phenol-based compounds, alcohol-based compounds, lactam-based compounds, active methylene-based compounds, pyrazole-based compounds, mercaptan-based compounds, acid amide-based compounds, imide-based compounds, amine-based compounds, imidazole-based compounds, urea-based compounds, carbamate ester-based compounds, imine-based compounds, and sulfite-based compounds. These may be used alone, or in a combination of two or more.

Examples of oxime-based compounds include methyl ethyl ketoxime, and cyclohexanone oxime. Examples of phenol-based compounds include phenol, para-t-butylphenol, and cresol. Examples of alcohol-based compounds include n-butanol, 2-ethylhexanol, phenylcarbinol, methylphenylcarbinol, ethylene glycol monomethyl ether, ethylene glycol monoethyl ether, ethylene glycol monobutyl ether, diethylene glycol monoethyl ether, ethylene glycol, propylene glycol, propylene glycol monomethyl ether, and methoxy methanol. Examples of lactam-based compounds include ε-caprolactam, and γ-butyrolactam. Examples of active methylene-based compounds include dimethyl malonate, diethyl malonate, diisopropyl malonate, ethyl acetoacetate, isopropyl acetoacetate, methyl acetoacetate, isopropyl acetoacetate, and acetylacetone. Examples of pyrazole-based compounds include pyrazole, 3,5-dimethylpyrazole, 3-methylpyrazole, 4-bromo-3,5-dimethylpyrazole, 4-nitro-3,5-dimethylpyrazole, 4-benzyl-3,5-dimethylpyrazole, methyl-5-methylpyrazole-3-carboxylate, 3-methyl-5-phenylpyrazole, and 3,5-dimethylpyrazole-4-carboxyanilide. Examples of mercaptan-based compounds include butyl mercaptan, t-butyl mercaptan, hexyl mercaptan, t-dodecyl mercaptan, 2-mercaptobenzothiazole, thiophenol, methyl thiophenol, and ethyl thiophenol. Examples of acid amide-based compounds include acetanilide, acetanisidide, acrylamide, methacrylamide, acetamide, stearamide, and benzamide. Examples of imide-based compounds include succinimide, phthalimide, and maleimide. Examples of amine-based compounds include diphenylamine, phenylnaphthylamine, xylidine, N-phenylxylidine, carbazole, aniline, naphthylamine, butylamine, dibutylamine, and butylphenylamine. Examples of imidazole-based compounds include imidazole, and 2-ethylimidazole. Examples of urea-based compounds include urea, thiourea, ethylene urea, ethylene thiourea, and diphenyl urea. Examples of carbamate ester-based compounds include phenyl N-phenylcarbamate. Examples of imine compounds include ethylene imine and propylene imine. Examples of sulfite-based compounds include sodium bisulfite and potassium bisulfite.

In a preferred embodiment of the present invention, the blocking agent (b-2) for use may be at least one oxime-based compound (b-2-1) and/or at least one pyrazole-based compound (b-2-2). In such an embodiment, the oxime-based compound (b-2-1) and the pyrazole-based compound (b-2-2) for use may be those mentioned above, and these may be used alone or in a combination of two or more. An embodiment that uses the specific blocked polyisocyanate compound (B) is preferred from the standpoint of low-temperature curability and storage stability.

Specifically, in PTL 1, PTL 2, etc. above, the heating temperature when forming a coating film is usually higher than 160°C. However, in order to reduce energy costs, it is becoming required to perform heating at a lower temperature (20 to 130°C, preferably 50 to 120°C, and more preferably 80 to 110°C); thus, further improving catalytic performance is indispensable.

The baking at low temperatures is typically performed using a low-temperature-curable blocked polyisocyanate compound as a curing agent. For example, PTL 3 discloses performing curing at a low temperature using a cationic electrodeposition paint that contains isocyanates blocked with an oxime. In addition, PTL 4 discloses using a blocked polyisocyanate compound blocked with an oxime-based compound and/or a lactam-based compound to allow dissociation (reaction) of the blocked polyisocyanate compound to occur at relatively low temperatures.

However, electrodeposition paint compositions with enhanced low-temperature reactivity can have insufficient long-term storage stability (bath stability), which can result in inferior appearance, corrosion resistance, etc. of the resulting coating film. In contrast, the preferred embodiment of the present invention described above, in which the specific blocked polyisocyanate compound (B) is used, is preferred to achieve both low-temperature curability and storage stability.

In this embodiment, among the oxime-based compound (b-2-1) and the pyrazole-based compound (b-2-2), it is preferred to use the oxime-based compound (b-2-1) from the standpoint of storage stability. In such an embodiment, blocking agents other than the oxime-based compound (b-2-1) and the pyrazole-based compound (b-2-2) can be optionally used in combination. The other blocking agents that can be used in combination may be, for example, those mentioned above. The proportion of the oxime-based compound (b-2-1) when used as the blocking agent (b-2) is not limited; for example, the oxime-based compound (b-2-1) itself may be used alone as the blocking agent (b-2). The solids content of the oxime-based compound (b-2-1) is preferably 30 mass% or more, and more preferably 50 mass% or more, based on 100 mass% of the solids content of the blocking agent (b-2). The solids content of the oxime-based compound (b-2-1) is preferably 100 mass% or less, based on 100 mass% of the solids content of the blocking agent (b-2) .

The proportion of the pyrazole-based compound (b-2-2) when used as the blocking agent (b-2) is not limited; for example, the pyrazole-based compound (b-2-2) itself may be used alone as the blocking agent (b-2). The solids

content of the pyrazole-based compound (b-2-2) is preferably 30 mass% or more, and more preferably 50 mass% or more, based on 100 mass% of the solids content of the blocking agent (b-2). The solids content of the pyrazole-based compound (b-2-2) is preferably 100 mass% or less, based on 100 mass% of the solids content of the blocking agent (b-2) .

When the oxime-based compound (b-2-1) and the pyrazole-based compound (b-2-2) are used in combination, the proportions of these compounds are not limited. The solids content of the pyrazole-based compound (b-2-2) for use is preferably 0.1 to 99.9 parts by mass per 100 parts by mass of the solids content of the oxime-based compound (b-2-1).

Modified Imidazole (C)

The modified imidazole (C) is a compound represented by the following Formula (1).

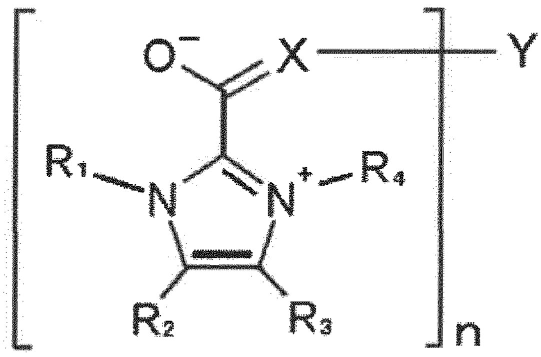

・・・Formula (1)

wherein $R_1$, $R_2$, $R_3$, and $R_4$ may be identical or different, and each represents a hydrogen atom or an organic group containing one or more carbon atoms, wherein the organic group may contain at least one member selected from the group consisting of oxygen, nitrogen, sulfur, and halogen, and two or more of (typically adjacent) $R_1$, $R_2$, $R_3$, and $R_4$, taken together with the carbon and/or nitrogen to which they are attached, may form a ring; and

X represents oxygen or nitrogen, and when X represents oxygen, Y is absent and n is 1, and when X represents nitrogen, Y represents an organic group while n is an integer of 1 or more.

When $R_1$, $R_2$, $R_3$, and/or $R_4$ are organic groups, examples of the organic groups include monovalent organic groups, such as alkyl, alkenyl, alkynyl, cycloalkyl, cycloalkylalkyl, hydroxyalkyl, alkoxy, thioalkoxy, alkoxyalkyl, thioalkoxyalkyl, aryl, arylalkyl, aralkyl, and heterocyclic groups.

X preferably represents nitrogen. When X represents nitrogen, examples of the organic group represented by Y include aryl and aralkyl. Examples of the aryl include those mentioned above, with phenyl and naphthyl being preferable, and phenyl being more preferable. Examples of the aralkyl include those mentioned above, with phenylalkyl and naphthylalkyl being preferable, and phenylalkyl being more preferable. The aryl or aralkyl represented by Y may be substituted or unsubstituted. When the aryl or aralkyl represented by Y is substituted, examples of the substituent include halogen (preferably chlorine or fluorine, and more preferably chlorine), and alkyl. When the aryl or aralkyl is substituted, the number of substituents is not limited, and is, for example, 1 to 3, and preferably 1 to 2. When the aryl or aralkyl represented by Y contains two or more substituents, the substituents may be identical or different.

Examples of Y include hydrocarbon containing one or more aromatic rings. Examples include a divalent group represented by the following Formula (2).

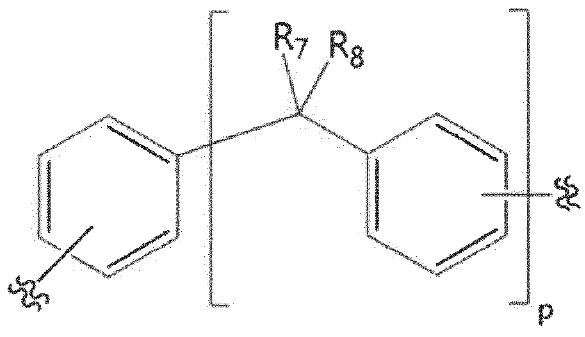

・・・Formula (2)

In the formula above, $R_7$ and $R_8$ may be identical or different, and each represents hydrogen or alkyl, and p is

an integer of 0 or more.

When $R_7$ and/or $R_8$ represent alkyl, examples of the alkyl include alkyl groups containing 1 to 10 carbon atoms, preferably 1 to 6 carbon atoms, more preferably 1 to 3 carbon atoms, more preferably 1 to 2 carbon atoms, and more preferably 1 carbon atom. $R_7$ and $R_8$ may be identical or different, and are preferably identical.

p is an integer of 0 or more, and preferably 1 to 4. When p is 2 or more, a plurality of the groups of:

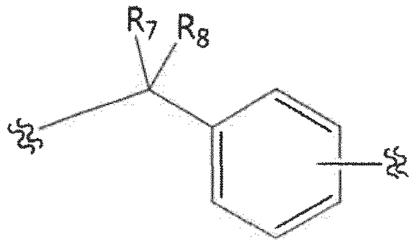

wherein $R_7$ and $R_8$ are as defined above, may be identical or different. In Formula (2), the above moiety is preferably attached to nitrogen at the para position; thus, the following structure is preferable.

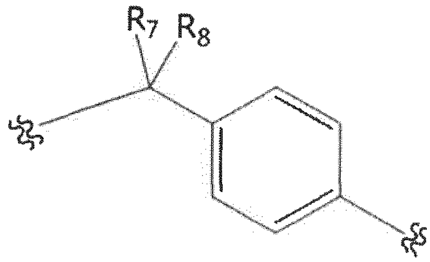

In the formula, $R_7$ and $R_8$ are as defined above.

Further, in Formula (2), the following moiety:

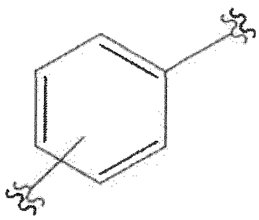

is also preferably attached to nitrogen at the para position; thus, the following structure is preferable.

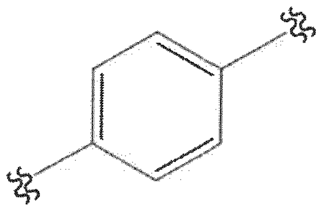

Examples of Y include a group represented by the following Formula (3):

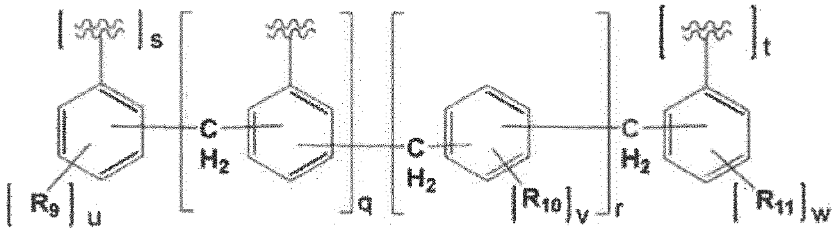

· · · Formula (3)

wherein $R_9$, $R_{10}$, and $R_{11}$ may be identical or different, and each represents an organic group containing one or more carbon atoms, wherein the organic group may contain at least one member selected from the group consisting of oxygen, nitrogen, sulfur, and halogen;

s and t represent 0 or 1, and when s and/or t are 0, the moiety:

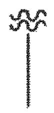

represents a hydrogen atom; and

q, r, u, v, and w each independently represent an integer of 0 to 4, and when q is 0, at least one of s and t is 1.

In this embodiment, the group represented by Formula (3) above is preferably a trivalent or higher-valent group; i.e., in Formula (3) above, the total of s, t, and q is preferably 3 or more.

In this embodiment, examples of the organic groups represented by $R_9$, $R_{10}$, and $R_{11}$ include alkyl, alkenyl, alkynyl, cycloalkyl, cycloalkylalkyl, mono- or di-alkylamino (preferably dialkylamino), and mono- or di-alkylcarbamoylamino (preferably dialkylcarbamoylamino).

In another embodiment according to the present invention, two or more of $R_1$, $R_2$, $R_3$, $R_4$, and Y (typically, adjacent two of $R_1$, $R_2$, $R_3$, and $R_4$), taken together with the carbon and/or nitrogen to which they are attached, may form a ring.

For example, when $R_2$ and $R_3$ form a ring, taken together with the carbon atoms to which they are attached, the structure can be as shown in the following Formula (4).

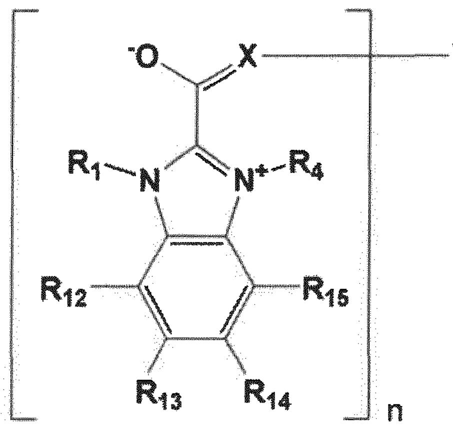

· · · Formula (4)

In the formula above, $R_1$, $R_4$, and Y are as defined above; and $R_{12}$, $R_{13}$, $R_{14}$, and $R_{15}$ may be identical or different, and each represents a hydrogen atom or an organic group containing one or more carbon atoms, wherein the organic group may contain at least one member selected from the group consisting of oxygen, nitrogen, sulfur, and halogen.

In this embodiment, when $R_{12}$, $R_{13}$, $R_{14}$, and/or $R_{15}$ are organic groups, examples of the organic groups include monovalent organic groups, such as alkyl, alkenyl, alkynyl, cycloalkyl, cycloalkylalkyl, hydroxyalkyl, alkoxy, thioalkoxy, alkoxyalkyl, thioalkoxyalkyl, aryl, arylalkyl, aralkyl, and heterocyclic groups.

When $R_1$, $R_2$, $R_3$, $R_4$, $R_{12}$, $R_{13}$, $R_{14}$, $R_{15}$, and Y are organic groups, the organic groups may be resins. Examples of the resins include acrylic resin, polyester resin, urethane resin, epoxy resin, and polyisocyanate resin. In this embodiment, the molecular weight of the resin represented by $R_1$, $R_2$, $R_3$, $R_4$, or Y is not particularly limited, and is preferably 300 or more, more preferably 500 or more, and still more preferably 800 or more.

The modified imidazole (C) preferably has low solubility in water, and is typically insoluble in water. Therefore, in Formula (1), at least one member selected from $R_1$, $R_2$, $R_3$, $R_4$, and Y is preferably an organic group containing 6 or more carbon atoms, more preferably an organic group containing 8 or more carbon atoms, and still more preferably an organic group containing 21 or more carbon atoms.

In one embodiment, Y is an organic group containing 21 or more carbon atoms.

In another embodiment, $R_1$ or $R_4$ is an organic group containing 6 to 18 (preferably 6 to 12) carbon atoms. The organic group is alkyl, alkenyl, alkynyl, cycloalkyl, cycloalkylalkyl, hydroxyalkyl, alkoxy, thioalkoxy, alkoxyalkyl, thioalkoxyalkyl, aryl, arylalkyl, aralkyl, or a heterocyclic group.

In another embodiment, one of $R_1$ and $R_4$ is an organic group containing 1 to 5 carbon atoms, and the other of $R_1$ and $R_4$ is an organic group containing 6 to 18 (preferably 6 to 12) carbon atoms. The organic group represented by $R_1$ and the organic group represented by $R_4$ are each independently alkyl, alkenyl, alkynyl, cycloalkyl, cycloalkylalkyl, hydroxyalkyl, alkoxy, thioalkoxy, alkoxyalkyl, thioalkoxyalkyl, aryl, arylalkyl, aralkyl, or a heterocyclic group.

In another embodiment, one of $R_1$ and $R_4$ is an organic group containing 1 to 5 carbon atoms, and the other of $R_1$ and $R_4$ is an organic group containing 6 to 18 (preferably 6 to 12) carbon atoms. The organic group represented by $R_1$ and the organic group represented by $R_4$ are each independently alkyl, alkenyl, alkynyl, hydroxyalkyl, alkoxy, thioalkoxy, alkoxyalkyl, thioalkoxyalkyl, aryl, arylalkyl, aralkyl, or a heterocyclic group; and $R_2$ and $R_3$ each represent hydrogen.

In another embodiment, $R_1$ and $R_4$ each represent an organic group containing 6 to 18 (preferably 6 to 12) carbon atoms. The organic group represented by $R_1$ and the organic group represented by $R_4$ are each independently alkyl, alkenyl, alkynyl, cycloalkyl, cycloalkylalkyl, hydroxyalkyl, alkoxy, thioalkoxy, alkoxyalkyl, thioalkoxyalkyl, aryl, arylalkyl, aralkyl, or a heterocyclic group.

In another embodiment, $R_1$ and $R_4$ each represent an organic group containing 6 to 18 (preferably 6 to 12) carbon atoms. The organic group represented by $R_1$ and the organic group represented by $R_4$ are each independently alkyl, alkenyl, alkynyl, hydroxyalkyl, alkoxy, thioalkoxy, alkoxyalkyl, thioalkoxyalkyl, aryl, arylalkyl, aralkyl, or a heterocyclic group; and $R_2$ and $R_3$ each represent hydrogen.

The modified imidazole (C) preferably contains a counter ion in the same molecule to balance the charges.

Examples of the method for producing the modified imidazole (C) include the following methods.

A method for producing a modified imidazole (C) in which X in Formula (1) is oxygen (referred to below as "the modified imidazole (C1)," the method comprising reacting a nitrogen-containing organic compound represented by the following Formula (5):

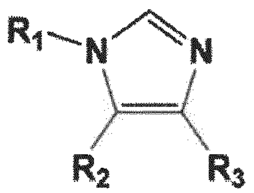
. . . Formula (5)

wherein $R^1$, $R^2$, and are as defined above,
(referred to below as "the nitrogen-containing organic compound (5)") with dialkyl carbonate (6) represented by the following Formula (6):

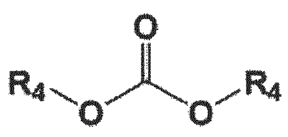
. . . Formula (6)

wherein $R_4$ is as defined above,
(referred to below as "the dialkyl carbonate (6)") to produce a modified imidazole (C1) represented by the following Formula (7):

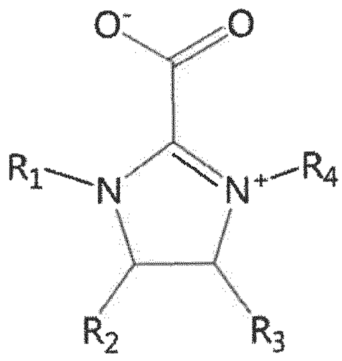

. . . Formula (7)

wherein $R_1$, $R_2$, $R_3$, and $R_4$ are as defined above.

Preferable examples of the nitrogen-containing organic compound (5) include 1-methylimidazole, 1-butylimidazole, and 1-octylimidazole.

Preferable examples of the dialkyl carbonate (6) include dimethyl carbonate. The amount of the dialkyl carbonate (6) for use is usually 1 mol or more, and preferably 1 to 6 mol, per mol of the nitrogen-containing organic compound (5).

Solvents may or may not be used. When used, the solvents for use are not particularly limited as long as they do not affect the reaction. Specific examples of solvents include monohydric alcohol solvents, such as methanol, ethanol, propanol, butanol, pentanol, hexanol, 1-methoxy-2-propanol, and ethoxyethanol; polyol solvents, such as ethylene glycol, propylene glycol, and diethylene glycol; and glycol monoalkyl ether solvents, such as dipropylene glycol mono n-butyl ether, dipropylene glycol monomethyl ether, tripropylene glycol monomethyl ether, propylene glycol mono n-propyl ether, dipropylene glycol mono n-propyl ether, propylene glycol mono n-butyl ether, tripropylene glycol mono n-butyl ether, propylene glycol monomethyl ether, and diethylene glycol monoethyl ether, with monohydric alcohol solvents being preferable, and methanol being particularly preferable. The amount of the solvent for use is usually 50 parts by mass or less, and preferably 10 parts by mass or less, per part by mass of the nitrogen-containing organic compound (5).

After completion of the reaction, the reaction liquid is concentrated, and the solvent is removed to thus isolate the modified imidazole (C1). The concentration of the reaction liquid can also remove the unreacted nitrogen-containing organic compound (5) and dialkyl carbonate (6) if they remain in the reaction liquid.

A method for producing a modified imidazole (C) in which X in Formula (1) is nitrogen (referred to below as "the modified imidazole (C2)," the method comprising reacting an isocyanate compound represented by the following Formula (8):

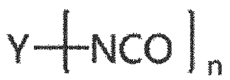

. . . Formula (8)

wherein Y and n are as defined above for Formula (1), (referred to below as "the isocyanate compound (8)") with the modified imidazole (C1) can produce a modified imidazole (C2) represented by Formula (9):

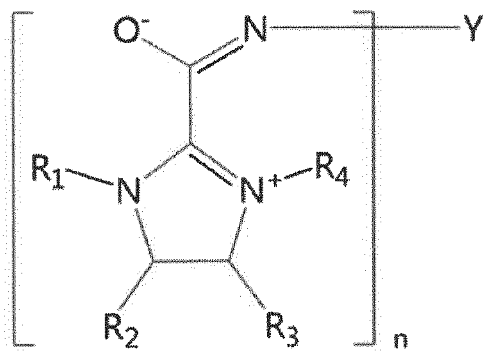

. . . Formula (9)

wherein $R_1$, $R_2$, $R_3$, $R_4$, Y, and n are as defined above for Formula (1) .

In one embodiment according to the present invention, some compounds of the modified imidazole (C2) can also be produced by a method comprising reacting an isocyanate compound represented by the following Formula (8'):

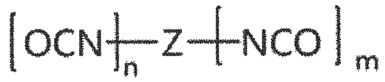 . . . Formula (8')

wherein Z is a divalent organic group, m is an integer of 1 or more, and n is as defined above for Formula (1), wherein the organic group represented by Z may be, but is not particularly limited to, a known organic group, and specific examples include linear, branched, and/or cyclic alkylene groups,
(referred to below as "the isocyanate compound (8')") with the modified imidazole (C1), wherein before, after, and/or simultaneously with the reaction, a compound (C3), which is other than the modified imidazole (C1) and is reactive with isocyanate groups, (referred to below as "the compound (C3)") is further reacted, to thus produce an imidazole compound (C2') represented by the following Formula (9'):

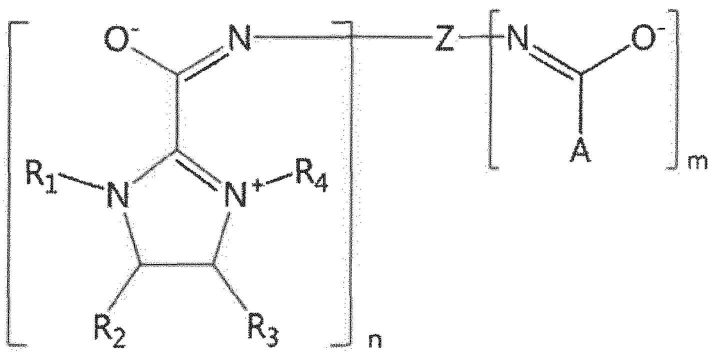 . . . Formula (9')

wherein $R_1$, $R_2$, $R_3$, $R_4$, Z, m, and n are as defined above, and A represents an organic group derived from the compound (C3), wherein when m is 2 or more, As may be identical or different.

The isocyanate compound (8) and isocyanate compound (8') above are compounds containing one or more isocyanate groups per molecule.

Examples of isocyanate compounds containing one isocyanate group per molecule include methyl isocyanate, ethyl isocyanate, propyl isocyanate, butyl isocyanate, lauryl isocyanate, cyclohexyl isocyanate, phenyl isocyanate, tolylene isocyanate, and derivatives of these isocyanate compounds.

Examples of compounds containing two or more isocyanate groups per molecule include aliphatic polyisocyanates, alicyclic polyisocyanates, araliphatic polyisocyanates, aromatic polyisocyanates, and derivatives of these polyisocyanates.

Examples of aliphatic polyisocyanates include trimethylene diisocyanate, tetramethylene diisocyanate, hexamethylene diisocyanate (HDI), 1,2-, 2,3-, or 1,3-butylene diisocyanate, and 2,4,4- or 2,2,4-trimethyl hexamethylene diisocyanate.

Examples of alicyclic polyisocyanates include 1,3-cyclopentene diisocyanate, 1,4-cyclohexane diisocyanate, 1,3-cyclohexane diisocyanate, 3-isocyanatomethyl-3,5,5-trimethylcyclohexyl isocyanate (isophorone diisocyanate; IPDI), 4,4'-, 2,4'- or 2,2'-dicyclohexylmethane diisocyanate or a mixture thereof (hydrogenated MDI), methyl-2,4-cyclohexane diisocyanate, methyl-2,6-cyclohexane diisocyanate, 1,3- or 1,4-bis(isocyanatomethyl)cyclohexane or a mixture thereof (hydrogenated XDI), and norbornane diisocyanate (NBDI).

Examples of aromatic polyisocyanates include aromatic diisocyanates, such as m- or p-phenylene diisocyanate or a mixture thereof, 2,4- or 2,6-tolylene diisocyanate or a mixture thereof (TDI), 4,4'-, 2,4'-, or 2,2'-diphenylmethane diisocyanate or a mixture thereof (MDI), 4,4'-toluidine diisocyanate (TODI), 4,4'-diphenyl ether diisocyanate, 4,4'-diphenyl diisocyanate, and 1,5-naphthalene diisocyanate (NDI).

Examples of polyisocyanate derivatives include dimers, trimers, biurets, allophanates, carbodiimides, uretdiones, urethoimines, isocyanurates, oxadiazinetriones, polymethylene polyphenyl polyisocyanates (crude MDI, polymeric MDI), and crude TDI of polyisocyanate compounds mentioned above.

Of these, the isocyanate compound containing one isocyanate group per molecule is preferably phenyl isocyanate. The isocyanate compound containing two or more isocyanate groups per molecule is preferably an aromatic polyisocyanate, and more preferably MDI or crude MDI.

These isocyanate compounds (8) can be used alone, or in a combination of two or more.

In the formula above, examples of the organic groups represented by A include mono- or di-alkylamino.

The amount of the modified imidazole (C1) for use is usually 0.8 mol or more, and preferably 1 to 3 mol, per mol of the isocyanate group contained in the isocyanate compound (8).

A solvent may or may not be used. When a solvent is used, a hydrocarbon solvent is suitably used. Examples of hydrocarbon solvents include aromatic hydrocarbon solvents, such as toluene, benzene, and xylene; aliphatic or alicyclic hydrocarbon solvents, such as methyl cyclohexane, cyclohexane, n-hexane, n-heptane, and octane; halogenated aliphatic hydrocarbon solvents, such as dichloromethane and chloroform; and halogenated aromatic hydrocarbon solvents, such as chlorobenzene and dichlorobenzene, with aromatic hydrocarbon solvents and halogenated aromatic hydrocarbon solvents being preferable, and toluene, xylene, and chlorobenzene being particularly preferable. The solvents may be optionally used in combination of two or more.

When a reaction liquid obtained by reacting the nitrogen-containing organic compound (5) with the dialkyl carbonate (6) is used as the modified imidazole (C1), the solvent in the reaction liquid can be directly used as a solvent for the reaction of the isocyanate compound (8) with the modified imidazole (C1). At this time, the reaction may also be carried out optionally by adding a solvent.

When a solvent is used, the amount of the solvent for use is usually 50 parts by mass or less, and preferably 0.1 parts by mass or more and 35 parts by mass or less, per part by mass of the modified imidazole (C1).

The reaction temperature is not particularly limited as long as it is the boiling point of the solvent or lower. The reaction temperature is usually 10°C or higher, preferably 40 to 200°C, and particularly preferably 80 to 150°C.

The reaction may be performed optionally in an atmosphere of inert gas that does not affect the reaction, such as nitrogen, argon, or helium.

After completion of the reaction, the modified imidazole (C2) can be obtained by removing the solvent by concentrating or filtering the reaction liquid. The obtained modified imidazole (C2) can be purified by a method such as recrystallization.

## Rust Inhibitor (D)

In a preferred embodiment, the cationic electrodeposition paint of the present invention may comprise a rust inhibitor (D). The embodiment according to the invention in which the rust inhibitor (D) is used is preferred because the embodiment substantially uses a catalyst other than tin-based catalysts and can provide a blocked polyisocyanate-based, novel cationic electrodeposition paint composition that exhibits high curability and achieves high corrosion resistance and excellent appearance of the resulting coating film.

Examples of the rust inhibitor (D) include compounds of at least one metal selected from the group consisting of Be, Mg, Ca, Sr, Ba, Zn, Al, and Bi. Specifically, examples of Ba-based compounds include barium phosphate and barium phosphite. Examples of Mg-based compounds include magnesium phosphite, magnesium phosphate, and magnesium zinc phosphate. Examples of Ca-based compounds include calcium zinc phosphate, calcium phosphate, and calcium phosphite. Examples also include MC-400WR, MC-400WZ (both produced by Kikuchi Color & Chemicals Corporation, trade names, calcium molybdate), and NP-1020C (produced by Toho Ganryo Kogyo Co., Ltd., trade name, calcium phosphite). Examples of Sr-based compounds include strontium phosphate and strontium phosphite. Examples of Zn-based compounds include zinc phosphite, zinc phosphate, and zinc oxide. Examples also include YM102NS (produced by Taihei Chemical Industrial Co., Ltd., trade name, strontium zinc phosphite), P-W-2 (produced by Kikuchi Color & Chemicals Corporation, trade name, zinc phosphate), and ZP600 (produced by Kikuchi Color & Chemicals Corporation, trade name, zinc phosphite). Examples of Al-based compounds include aluminum phosphite, aluminum phosphate, aluminum tripolyphosphate, and aluminum phosphomolybdate. Examples also include PM-303W (produced by Kikuchi Color & Chemicals Corporation, trade name, aluminum phosphomolybdate), and K-G105W, K-140W, and K-84 (produced by Tayca Corporation, trade names, aluminum tripolyphosphate). Examples of Bi-based compounds include inorganic bismuth-containing compounds and organic bismuth-containing compounds. Examples of inorganic bismuth-containing compounds include bismuth silicate, bismuth hydroxide, bismuth trioxide, bismuth nitrate, and bismuth oxy carbonate. Of these, bismuth hydroxide is particularly preferred. Examples of organic bismuth-containing compounds include bismuth lactate, triphenyl bismuth, bismuth gallate, bismuth benzoate, bismuth citrate, bismuth methoxyacetate, bismuth acetate, bismuth arsenate, and bismuth 2,2-dimethylolpropionate.

For the rust inhibitor (D), composite metal compounds (compounds containing two or more metals) of the metals listed above can also be suitably used.

These metal compounds may be used alone, or in a combination of two or more. In particular, bismuth compounds are preferably used from the standpoint of corrosion resistance and curability.

## Cationic Electrodeposition Paint Composition

The proportions of the amino-group-containing epoxy resin (A) and the blocked polyisocyanate compound (B) in the cationic electrodeposition paint composition of the present invention are preferably such that the solids content of component (A) is 50 to 90 parts by mass, and preferably 55 to 85 parts by mass; and the solids content of component (B) is 10 to 50 parts by mass, and preferably 15 to 45 parts by mass, based on 100 parts by mass of the total resin solids

content of the components (A) and (B), so as to achieve excellent paint stability and obtain a coated article having excellent appearance and excellent corrosion resistance. Further, the proportion of the modified imidazole (C) is preferably, for example, 0.01 to 10 mass%, more preferably 0.1 to 8 mass%, and still more preferably 0.5 to 6 mass%, based on the total resin solids content of the cationic electrodeposition paint composition. Further, the proportion of the rust inhibitor (D) is preferably, for example, 0.01 to 10 mass%, more preferably 0.1 to 8 mass%, and still more preferably 0.5 to 6 mass%, based on the total resin solids content of the cationic electrodeposition paint composition. The total amount of the modified imidazole (C) and the rust inhibitor (D) is preferably 0.02 to 15 mass%, more preferably 0.2 to 12 mass%, and still more preferably 0.5 to 9 mass%, based on the total resin solids content of the cationic electrodeposition paint composition.

The amine value of the entire resin contained in the paint is usually 20 to 100 mg KOH/g, and preferably 25 to 90 mg KOH/g, based on the resin solids content.

From the standpoint of the paint characteristics and coating film performance, the proportions, the amine value of the entire resin, etc., are preferably set within the above ranges.

The method for producing the cationic electrodeposition paint composition of the present invention is not particularly limited. For example, the cationic electrodeposition paint composition may be produced by fully mixing the resin (A) and compound (B), as well as various additives, such as a surfactant and a surface-adjusting agent, to produce a preparation resin; dispersing the preparation resin in water; and fully mixing the resulting dispersion of resin with a pigment dispersion paste, water, an organic solvent, a neutralizer, and the like. The neutralizer is not particularly limited, and known organic acids may be used, among which formic acid, lactic acid, acetic acid, or a mixture thereof is preferable.

The modified imidazole (C) may be dispersed in water with the resin (A) and the compound (B), or may be dispersed together with a pigment and a resin for pigment dispersion to form a pigment dispersion paste to be incorporated in the paint.

The pigment dispersion paste contains pigments, such as a color pigment, a rust-preventive pigment, and an extender pigment, that have been dispersed as fine particles therein. For example, the pigment dispersion paste can be prepared by mixing a resin for pigment dispersion, a neutralizer, and pigments, and subjecting the mixture to a dispersion treatment in a dispersing mixer, such as a ball mill, a sand mill, and a pebble mill.

Known resins may be used as the resin for pigment dispersion, without any particular limitation. Examples of usable resins include epoxy resin and/or acrylic resin, and surfactants having hydroxy and cationic groups, such as tertiary amine epoxy resin, quaternary ammonium salt epoxy resin, tertiary sulfonium salt epoxy resin, tertiary amine acrylic resin, quaternary ammonium salt acrylic resin, and tertiary sulfonium salt acrylic resin.

There is no particular limitation to the pigment, and known pigments may be used without any particular limitation. Examples of usable pigments include color pigments, such as titanium oxide, carbon black, and red iron oxide; and extender pigments, such as clay, mica, baryta, calcium carbonate, and silica.

To improve the curability of the coating film, known curing catalysts, such as organic catalysts, can be optionally used.

## Method for Forming a Coating Film

The present invention provides a method for forming a cationic electrodeposition coating film comprising the steps of immersing a substrate in an electrodeposition bath comprising the cationic electrodeposition paint composition described above, and applying a current using the substrate as a cathode. The present invention also provides a method for producing a coated article comprising the steps of immersing a substrate in an electrodeposition bath comprising the cationic electrodeposition paint composition, and applying a current across the substrate to form a coating film on the substrate.

Examples of substrates to which the cationic electrodeposition paint composition of the present invention is applied include automobile bodies, parts for two-wheeled vehicles, home appliances, and other appliances. The substrates are not particularly limited as long as they are made of metal.

Examples of metallic steel plates as substrates include cold-rolled steel plates, hot-dip galvanized steel plates, electro-galvanized steel plates, electrolytic zinc-iron duplex-plated steel plates, organic composite-plated steel plates, aluminum materials, magnesium materials, and the like. The surface of these metal plates may be optionally washed by alkali degreasing or the like, and then subjected to surface treatment, such as phosphate chemical conversion treatment, chromate treatment, or composite oxide treatment.

The cationic electrodeposition paint composition may be applied to a desired substrate surface by cationic electrodeposition coating. The cationic electrodeposition coating may be generally performed by using, as a bath, a cationic electrodeposition paint composition diluted with deionized water or the like to a solids concentration of about 5 to 40 mass%, and preferably 10 to 25 mass%, and to a pH of 4.0 to 9.0, and preferably 5.5 to 7.0. The temperature of the bath is usually adjusted to 15 to 35°C, and a current is applied thereto at a load voltage of 100 to 400 V, and preferably 150 to 350 V, using the substrate as a cathode. In general, after performing electrodeposition coating, the coated

substrate is fully washed with ultrafiltrate (UF filtrate), reverse osmosis water (RO water), industrial water, pure water, or the like, to remove the excessive cationic electrodeposition paint adhered to the substrate.

The film thickness of the electrodeposition coating film is not particularly limited. It is usually 5 to 40 μm, and preferably 10 to 30 μm, based on the film thickness of the dry coating film. The electrodeposition coating film is dried by baking at a temperature of usually 50 to 200°C using a dryer such as an electric hot-air dryer or a gas hot-air dryer. In the present invention, it is particularly preferred to perform baking at a low temperature (20 to 130°C, preferably 50 to 120°C, and more preferably 80 to 110°C). The heating of electrodeposition coating film is performed for 10 to 180 minutes, and preferably 20 to 50 minutes. A cured coating film can be obtained by performing bake-drying accordingly.

## Examples

The present invention is described in more detail below with reference to Examples and Comparative Examples.

Known methods in the relevant technical fields were used for polymerization of various resins, production of paints, evaluation tests, and the like.

However, the present invention is not limited to these, and numerous various alterations and variations are encompassed within a scope equivalent to the technical idea and the scope of the claims of the present invention.

In all of the Examples, the term "parts" denotes parts by mass, and "%" denotes percent by mass.

### Production of Amino-group-containing Epoxy Resin

#### Production Example a1

1200 parts of jER828EL (trade name, epoxy resin produced by Japan Epoxy Resin Co., Ltd., epoxy equivalent: 190, number average molecular weight: 350), 500 parts of bisphenol A, and 0.2 parts of dimethylbenzylamine were placed in a flask equipped with a stirrer, a thermometer, a nitrogen inlet tube, and a reflux condenser. The mixture was reacted at 130°C until the epoxy equivalent was 850.

Subsequently, 160 parts of diethanolamine and 65 parts of ketiminated product of diethylenetriamine and methyl isobutyl ketone were added, and the mixture was reacted at 120°C for 4 hours. Thereafter, 480 g of ethylene glycol monobutyl ether was added to obtain an amino-group-containing epoxy resin A-la solution having a solids content of 80%. The amino-group-containing epoxy resin A-1a had an amine value of 59 mg KOH/g and a number average molecular weight of 2100.

### Production of Blocked Polyisocyanate Compound

#### Production Example a2: Blocked Isocyanate Curing Agent (B-1a)

270 parts of Cosmonate M-200 (trade name, crude MDI, produced by Mitsui Chemicals, Inc.) and 127 parts of methyl isobutyl ketone were placed in a reaction vessel, followed by heating to 70°C. 236 parts of ethylene glycol monobutyl ether was added thereto dropwise over a period of 1 hour, and the mixture was heated to 100°C. While maintaining this temperature, sampling was performed over time. After no absorption by unreacted isocyanate groups was confirmed by infrared spectroscopy, methyl isobutyl ketone was further added, thus obtaining a blocked isocyanate curing agent (B-1a) having a resin solids content of 70%. The obtained blocked isocyanate curing agent (B-1a) containing an alcohol-based compound as a blocking agent had an NCO content of 16.7%.

In the present specification, the NCO content refers to the content (%) of NCO groups per 100 parts by mass of the resin solids content.

#### Production Example a3: Blocked Isocyanate Curing Agent (B-2a)

272 parts of hexamethylene diisocyanate and 214 parts of methyl ethyl ketone were placed in a four-necked flask equipped with a stirrer, a heating device, a cooling device, and a pressure-reducing device, followed by heating to 60°C. Then, 169 parts of methyl ethyl ketoxime were gradually added thereto over a period of 1 hour with stirring. Subsequently, the reaction was allowed to proceed at 60°C for 2 hours, and 59 parts of trimethylolpropane were then gradually added such that the temperature did not reach 70°C or higher. Then, the reaction mixture was reacted at 60°C under stirring until no free isocyanate groups were detected by infrared spectroscopy. After completion of the reaction, a blocked isocyanate curing agent (B-2a) having a solids content of 70% was obtained. The obtained blocked isocyanate curing agent (B-2a) containing an oxime-based compound as a blocking agent had an NCO content of 16.4%.

Production Example a4: Blocked Isocyanate Curing Agent (B-3a)

250 parts of Sumidur N3300 (produced by Sumika Bayer Urethane Co., Ltd., trade name, an isocyanurate of hexamethylene diisocyanate) and 125 parts of methyl ethyl ketone were prepared in a four-necked flask equipped with a stirrer, a heating device, a cooling device, and a pressure-reducing device, followed by heating to 30°C. Then, 126 parts of 3,5-dimethylpyrazole were gradually added thereto over a period of 2 hours with stirring, and the reaction mixture was reacted at 30°C under stirring until no free isocyanate groups were detected by infrared spectroscopy. After completion of the reaction, a blocked isocyanate curing agent (B-3a) having a solids content of 70% was obtained. The obtained blocked isocyanate curing agent (B-3a) containing a pyrazole-based compound as a blocking agent had an NCO content of 14.4%.

Production of Resin for Pigment Dispersion

Production Example a5

1010 parts of jER828EL (trade name, epoxy resin produced by Japan Epoxy Resin Co., Ltd., epoxy equivalent: 190, number average molecular weight: 350), 390 parts of bisphenol A, 240 parts of PLACCEL 212 (trade name, polycaprolactone diol produced by Daicel Chemical Industries, Ltd., weight average molecular weight = about 1250), and 0.2 parts of dimethylbenzylamine were placed in a flask equipped with a stirrer, a thermometer, a dropping funnel, and a reflux condenser. The mixture was reacted at 130°C until the epoxy equivalent was about 1090. Subsequently, 134 parts of dimethylethanolamine and 150 parts of a 90% aqueous lactic acid solution were added thereto, and the mixture was reacted at 90°C until the epoxy groups disappeared. Thereafter, propylene glycol monomethyl ether was added thereto to adjust the solids content, thus obtaining a quaternary-ammonium-base-containing resin for pigment dispersion having a solids content of 60%.

Production of Modified Imidazole

Production Example a6: Production of Modified Imidazole C-1a

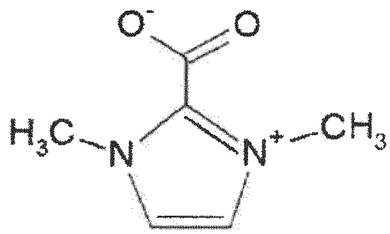

(10)

82.1 g (1.0 mol) of 1-methylimidazole, 119.8 g (1.0 mol) of dimethyl carbonate, and 83.1 g of methanol were placed in a 500-mL autoclave purged with nitrogen, and the mixture was stirred at 120°C for 22 hours. The obtained reaction mixture was cooled to 25°C, followed by drying under reduced pressure. The obtained white solid was washed with toluene and dried under reduced pressure, thus obtaining 47.8 g of modified imidazole C-1a represented by Formula (10) above (1,3-dimethylimidazolium-2-carboxylate) (yield: 34 %). This composition was dissolved in water.

Production Example a7: Production of Modified Imidazole C-2a

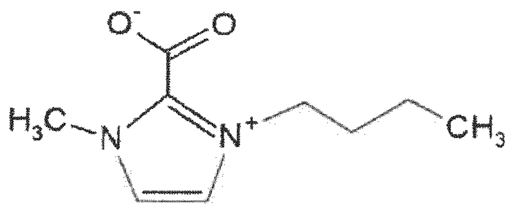

(11)

25.9 g (0.2 mol) of 1-butylimidazole, 25.0 g (0.3 mol) of dimethyl carbonate, and 26.2 g of methanol were placed in a 180-ml autoclave purged with nitrogen. The mixture was stirred at 125°C for 19 hours, followed by further stirring at 130°C for 4 hours. The obtained reaction mixture was cooled to 25°C, thus obtaining 73.0 g of a solution of modified imidazole C-2a represented by Formula (11) above in methanol (purity content of the modified imidazole C-2a: 34.3 g; yield: 95%). This composition was dissolved in water.

Production Example a8: Production of Modified Imidazole C-3a

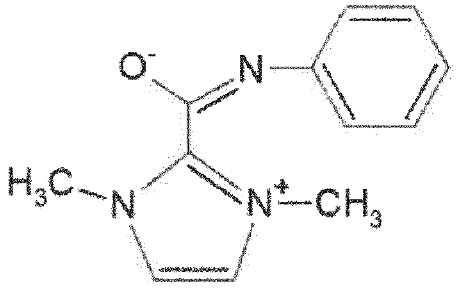

(12)

3.0 g (21 mmol) of the modified imidazole C-1a obtained in Production Example a4 (1,3-dimethylimidazolium-2-carboxylate), 100 mL of toluene, and 2.5 g (21 mmol) of phenyl isocyanate were placed in a three-necked flask purged with nitrogen, followed by stirring at 110°C for 3 hours. The obtained reaction mixture was cooled to 25°C, followed by concentration under reduced pressure, thus obtaining 5.3 g of modified imidazole C-3a represented by the above formula (purity content of the compound represented by Formula (12): 4.9 g; yield: 97%). This composition was not dissolved in water.

Production Example a9: Production of Modified Imidazole C-4a

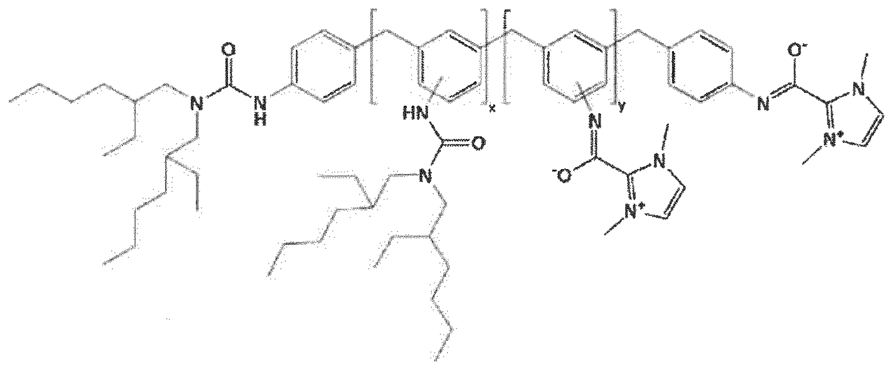

(13)

52.9 g (414.1 mmol of isocyanate groups) of Sumidur 44V20L (produced by Sumika Covestro Urethane Co., Ltd., crude MDI, isocyanate content: 33%) and 400 mL of toluene were placed in a 1-L four-necked flask purged with nitrogen. The mixture was ice-cooled (internal temperature: 6°C), and a solution of 50.0 g (207.1 mmol) of di(2-ethylhexyl)amine in 100 mL of toluene was added thereto dropwise while stirring. The mixture was then stirred at room temperature for 1 hour.

29.0 g (207.1 mmol) of the modified imidazole C-1a (1,3-dimethylimidazolium-2-carboxylate) obtained in Production Example a6 was added to the resulting reaction liquid, followed by stirring at 110°C for 2 hours. The obtained reaction mixture was dried under reduced pressure, and the obtained concentrated residue was washed twice with 500 mL of water, followed by drying under reduced pressure to thus obtain 93.9 g of modified imidazole C-4a. It is presumed that the modified imidazole C-4a is a composition comprising a compound having a structure represented by Formula (13) above. This composition was not dissolved in water.

Production Example a10: Production of Modified Imidazole C-5a

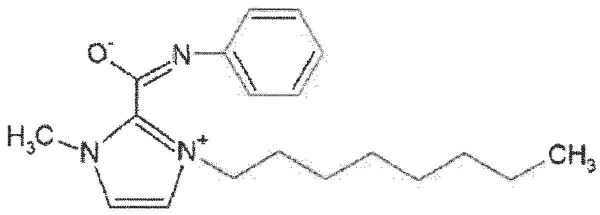

(14)

25.0 g (139 mmol) of 1-octylimidazole, 16.7 g (185 mmol) of dimethyl carbonate, and 25.1 g of methanol were placed in a 180-mL autoclave purged with nitrogen, followed by stirring at 125°C for 29 hours. The resulting reaction mixture was cooled to or below the boiling point of the solvent, and 8.5 g (94 mmol) of dimethyl carbonate was added thereto, followed by stirring at 130°C for another 3 hours. The obtained reaction mixture was cooled to 25°C, thus obtaining 44.0 g of a solution of 1-octyl-3-methylimidazolium-2-carboxylate in methanol (purity content: 33.0 g, yield: 99%).

Subsequently, 4.0 g of a solution of 1-octyl-3-methylimidazolium-2-carboxylate in methanol (purity content of 1-octyl-3-methylimidazolium-2-carboxylate: 3.0 g (13 mmol)), 1.5 g (13 mmol) of phenyl isocyanate, and 100 mL of toluene were placed in a 200-ml test tube purged with nitrogen, followed by stirring at 110°C for 3 hours. The obtained reaction mixture was cooled to 25°C, followed by concentration under reduced pressure, thus obtaining 3.3 g of modified imidazole C-5a represented by Formula (14) above (yield: 84%). This composition was not dissolved in water.

Production Example a11: Production of Modified Imidazole C-6a

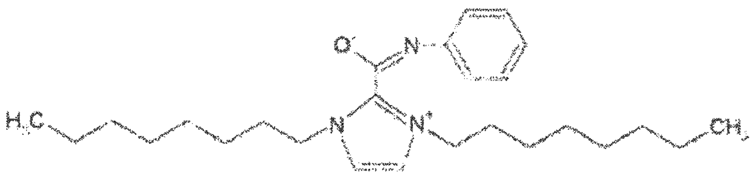

(15)

77.5 g (0.60 mol) of octylamine was placed in a 300-mL four-necked reaction vessel purged with nitrogen, and the reaction liquid was cooled to 10°C or lower. Next, a liquid mixture of 22.9 g of 40% aqueous formaldehyde solution (formaldehyde purity content: 0.30 mol) and 27.0 g (0.45 mol) of acetic acid was added thereto dropwise over 2 hours, followed by stirring at 0°C for 30 minutes. Thereafter, the temperature was returned to room temperature, 43.5 g of 40% aqueous glyoxal solution (glyoxal purity content: 0.30 mol) was added thereto, and the resulting mixture was stirred at room temperature for 20 hours. After stirring, the obtained reaction mixture was washed three times with 50 g of heptane, and the obtained aqueous layer was concentrated under reduced pressure to thus obtain 108.4 g of 1,3-dioctylimidazolium acetate.

Subsequently, 10.0 g (0.03 mol) of 1,3-dioctylimidazolium acetate, 50.0 g of chlorobenzene, and 3.0 g of molecular sieve 4A were placed, and allowed to stand for 16 hours under nitrogen. The molecular sieve 4A was then removed by filtration, the resulting solution was placed in a 200-mL three-necked reaction vessel purged with nitrogen, and 15.4 g (0.10 mol) of N-methylphenylcarbamate was added thereto, followed by stirring at 130°C for 4 hours. After stirring, the obtained reaction mixture was concentrated under reduced pressure to thus obtain 24.0 g of a brown solid. The obtained brown liquid was isolated on an alumina column, thus obtaining a compound represented by Formula (15) above, i.e., modified imidazole C-6a. This composition was not dissolved in water.

Production Example a12: Production of Modified Imidazole C-7a

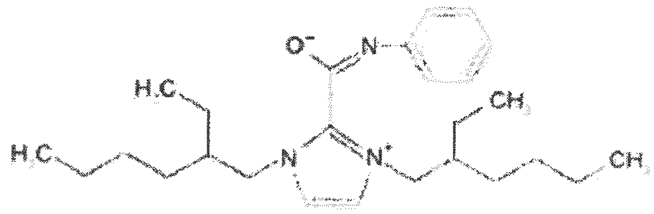 (16)

77.5 g (0.60 mol) of 2-ethylhexylamine was placed in a 300-mL four-necked reaction vessel purged with nitrogen, and the reaction liquid was cooled to 10°C or lower. Next, a liquid mixture of 22.9 g of 40% aqueous formaldehyde solution (formaldehyde purity content: 0.30 mol) and 27.0 g (0.45 mol) of acetic acid was added thereto dropwise over 2 hours, followed by stirring at 0°C for 30 minutes. Thereafter, the temperature was returned to room temperature, 43.5 g of 40% aqueous glyoxal solution (glyoxal purity content: 0.30 mol) was added thereto, and the resulting mixture was stirred at room temperature for 20 hours. After stirring, the obtained reaction mixture was washed three times with 50 g of heptane, and the obtained aqueous layer was concentrated under reduced pressure to thus obtain 108.4 g of 1,3-dioctylimidazolium acetate.

Subsequently, 10.0 g (0.03 mol) of 1,3-dioctylimidazolium acetate, 50.0 g of chlorobenzene, and 3.0 g of molecular sieve 4A were placed, and allowed to stand for 16 hours under nitrogen. The molecular sieve 4A was then removed by filtration, the resulting solution was placed in a 200-mL three-necked reaction vessel purged with nitrogen, and 15.4 g (0.10 mol) of N-methylphenylcarbamate was added thereto, followed by stirring at 130°C for 4 hours. After stirring, the obtained reaction mixture was concentrated under reduced pressure to thus obtain 24.0 g of a brown solid. The obtained brown liquid was isolated on an alumina column, thus obtaining a compound represented by Formula (16) above, i.e., modified imidazole C-7a. This composition was not dissolved in water.

Production of Pigment Dispersion Paste

Production Example a13

8.3 parts (solids content: 5 parts) of the quaternary-ammonium-base-containing resin for pigment dispersion having a solids content of 60% obtained in Production Example a5, 14.5 parts of titanium oxide, 5 parts of purified clay, 0.3 parts of carbon black, 2 parts of the modified imidazole C-1a obtained in Production Example a6 (amount of active ingredient), 2 parts of bismuth hydroxide, and 20.3 parts of deionized water were added and dispersed in a ball mill for 20 hours, thus obtaining a pigment dispersion paste P-1a having a solids content of 55%.

Production Examples a14 to a25

Pigment dispersion pastes P-2a to P-13a having a solids content of 55% were obtained in the same manner as in Production Example a13, except that the formulations were as shown in the following Table 1.

Table 1

| Production Example for pigment dispersion paste | | a13 | a14 | a15 | a16 | a17 | a18 | a19 | a20 | a21 | a22 | a23 | a24 | a25 |
|---|---|---|---|---|---|---|---|---|---|---|---|---|---|---|
| Pigment dispersion paste | | P-1a | P-2a | P-3a | P-4a | P-5a | P-6a | P-7a | P-8a | P-9a | P-10a | P-11a | P-12a | P-13a |
| Clay: content | | 5 | 5 | 5 | 5 | 5 | 5 | 5 | 5 | 5 | 5 | 5 | 5 | 7 |
| (C) | Modified imidazole: type | C-1a | C-2a | C-3a | C-4a | C-5a | C-5a | C-6a | C-6a | C-7a | C-7a | C-9a | C-8a | - |
| | Modified imidazole: amount | 2 | 2 | 2 | 2 | 2 | 2 | 2 | 2 | 2 | 2 | 2 | 2 | - |
| (D) | Zinc oxide: amount | | | | | | 2 | | 2 | | | 2 | 2 | 2 |
| | Bismuth hydroxide: amount | 2 | 2 | 2 | 2 | 2 | | 2 | | 2 | 2 | | | |

The amounts shown in the table are all amounts of active ingredients.
In the table, C-8a and C-9a are the following compounds:

C-8a: 1,3-dimethylimidazolium chloride (produced by Tokyo Chemical Industry Co., Ltd., water-soluble); and
C-9a: dioctyltin oxide (tin-based catalyst).

Production of Cationic Electrodeposition Paint

Example a1

87.5 parts (solids content: 70 parts) of the amino-group-containing epoxy resin A-la obtained in Production Example a1 and 37.5 parts (solids content: 30 parts) of the blocked polyisocyanate compound B-2a obtained in Production Example a3 were mixed, and 13 parts of 10% acetic acid was further added to the mixture. After the mixture was uniformly stirred, deionized water was added dropwise with vigorous stirring over a period of about 15 minutes to obtain an emulsion having a solids content of 34%. Thereafter, 294 parts (solids content: 100 parts) of the emulsion obtained above, 52.4 parts of the pigment dispersion paste P-1a obtained in Production Example a14, and 350 parts of deionized water were added to thus obtain a cationic electrodeposition paint X-1a having a solids content of 20%.

Examples a2 to a13 and Comparative Examples a1 to a3

Cationic electrodeposition paints X-2a to X-16a were produced in the same manner as in Example a1, except that the formulations were changed as shown in Table 2 below.
The table also shows the results of the evaluation tests described below (curability, low-temperature curability, appearance, corrosion resistance, and storage stability). The paint that contained dioctyltin oxide was at a passing level according to the evaluation results; however, this paint did not contain a modified imidazole according to the present invention, and was evaluated as failing in terms of environmental aspects (toxic); thus, the paint was taken as a Comparative Example.

Table 2

| Example and Comparative Example | | Example | | | | | | | | | | | | | Comparative Example | | |
|---|---|---|---|---|---|---|---|---|---|---|---|---|---|---|---|---|---|
| | | a1 | a2 | a3 | a4 | a5 | a6 | a7 | a8 | a9 | a10 | a11 | a12 | a13 | a1 | a2 | a3 |
| Cationic electrodeposition paint | | X-1a | X-2a | X-3a | X-4a | X-5a | X-6a | X-7a | X-8a | X-9a | X-10a | X-11a | X-12a | X-13a | X-14a | X-15a | X-16a |
| (A) | Amino-group-containing epoxy resin (A-1a) | 70 parts | 70 parts | 70 parts | 70 parts | 70 parts | 70 parts | 70 parts | 70 parts | 70 parts | 70 parts | 60 parts | 80 parts | 70 parts | 70 parts | 70 parts | 70 parts |
| (B) | Blocked polyisocyanate (B-1a) | | | | | | | | | | | | | | | | |
| | Blocked polyisocyanate (B-2a) | 30 parts | 30 parts | 30 parts | 30 parts | 30 parts | 30 parts | 30 parts | 30 parts | | 30 parts | 40 parts | 20 parts | | 30 parts | 30 parts | 30 parts |
| | Blocked polyisocyanate (B-3a) | | | | | | | | | 30 parts | | | | 30 parts | | | |
| Pigment dispersion paste | | P-1a | P-2a | P-3a | P-4a | P-5a | P-6a | P-7a | P-8a | P-7a | P-9a | P-10a | P-10a | P-10a | P-11a | P-12a | P-13a |
| Evaluation results | Curability (170°C) | A | A | A | A | A | A | A | A | A | A | A | A | A | A | A | A |
| | Curability (150°C) | A | A | A | A | A | A | A | A | A | A | A | B | A | A | A | A |
| | Low-temperature curability (110°C) | B | B | B | B | A | B | A | B | A | A | A | B | A | B | B | C |
| | Appearance (baked at 150°C) | B | B | A | S | S | S | S | S | S | S | S | S | S | S | C | S |
| | Corrosion resistance (baked at 150°C) | B | B | B | A | A | B | A | B | A | A | A | B | A | B | C | C |
| | Storage stability (baked at 150°C) | B | B | A | S | S | S | S | S | B | S | S | S | B | S | C | S |

The amounts of the resin shown in the table are all values based on solids content.

Production of Test Plates

Each of the cationic electrodeposition paints obtained in the Examples and Comparative Examples was applied by electrodeposition to cold-rolled steel plate substrates (150 mm (length) × 70 mm (width) × 0.8 mm (thickness)) that had been chemical-conversion-treated with Palbond #3020 (trade name, produced by Nihon Parkerizing Co., Ltd., a zinc phosphate treatment agent) so that the dry film thickness was 17 μm. The resulting films were dried by baking at 110°C, 150°C, or 170°C for 20 minutes to obtain test plates (three different plates).

Appearance (Surface Roughness)

Using a Surftest 301 (trade name, produced by Mitutoyo Corporation, surface roughness tester), the degree of surface roughness (Ra) of the coating films on the obtained test plates (baked at 150°C) was measured with a cut-off length of 0.8 mm and evaluated in accordance with the following criteria. In the evaluation, S to B are pass, and C is fail.

S: Surface Roughness (Ra) is less than 0.2.
A: Surface Roughness (Ra) is not less than 0.2, but less than 0.25.
B: Surface Roughness (Ra) is not less than 0.25, but less than 0.3.
C: Surface Roughness (Ra) is not less than 0.3.

Curability (Gel Fraction)

The curability (gel fraction) at 150°C and 170°C was evaluated using the obtained test plates.
In the evaluation, A and B are pass, and C is fail.

A: Gel fraction is not less than 90%.
B: Gel fraction is not less than 70%, but less than 90%.
C: Gel fraction is less than 70%.

Low-temperature Curability (Gel Fraction)

The curability (gel fraction) at 110°C was evaluated using the obtained test plates.
In the evaluation, A and B are pass, and C is fail.

A: Gel fraction is not less than 80%.
B: Gel fraction is not less than 60%, but less than 80%.
C: Gel fraction is less than 60%.

The gel fraction was measured according to the following procedure.

(1) Measuring the mass (X) of the test plate before coating.
(2) Performing electrodeposition coating and baking, and measuring the mass (Y) of the test plate having a cured coating film.
(3) Immersing the above test plate in acetone for treatment while heating and refluxing for 5 hours.
(4) Drying the test plate after the treatment, and measuring the mass (Z) of the dried test plate.
(5) Calculating the gel fraction (%) according to the following equation:

$$\text{Gel fraction (\%)} = [Z - X]/[Y - X] \times 100.$$

Corrosion Resistance (baked at 150°C)

The coating films were cross-cut with a knife so that the cut reached the substrate of the obtained test plates (baked at 150°C). The test plates were then subjected to a salt-spray test at 35°C for 840 hours in accordance with JIS Z-2371. Corrosion resistance was evaluated based on the width of rust and blistering from the cut on one side according to the following criteria. In the evaluation, A and B are pass, and C is fail.

A: The maximum width of rust and blistering from the cut on one side is not more than 2.0 mm.
B: The maximum width of rust and blistering from the cut on one side is more than 2.0 mm, but not more than 3.0 mm.
C: The maximum width of rust and blistering from the cut on one side is more than 3.0 mm.

Storage stability (Appearance and Surface Roughness after Storage)

The cationic electrodeposition paints obtained in the Examples and Comparative Examples were placed in sealed containers, and stored at 40°C for 30 days. Subsequently, each of the cationic electrodeposition paints after storage was applied by electrodeposition to cold-rolled steel plate substrates (150 mm (length) × 70 mm (width) × 0.8 mm (thickness)) that had been chemical-conversion-treated with Palbond #3020 (trade name, produced by Nihon Parkerizing Co., Ltd., a zinc phosphate treatment agent) so that the dry film thickness was 17 μm. The resulting films were dried by baking at 150°C for 20 minutes to obtain test plates.
Using a Surftest 301 (trade name, produced by Mitutoyo Corporation, surface roughness tester), the degree of surface roughness (Ra) of the coating films on the obtained test plates was measured with a cut-off length of 0.8 mm and evaluated in accordance with the following criteria. In the evaluation, S to B are pass, and C is fail.

S: Surface Roughness (Ra) is less than 0.2.
A: Surface Roughness (Ra) is not less than 0.2, but less than 0.25.
B: Surface Roughness (Ra) is not less than 0.25, but less than 0.3.
C: Surface Roughness (Ra) is not less than 0.3.

Production of Amino-group-containing Epoxy Resin

Production Example b1

1200 parts of jER828EL (trade name, epoxy resin produced by Japan Epoxy Resin Co., Ltd., epoxy equivalent: 190, number average molecular weight: 350), 500 parts of bisphenol A, and 0.2 parts of dimethylbenzylamine were placed in a flask equipped with a stirrer, a thermometer, a nitrogen inlet tube, and a reflux condenser. The mixture was reacted at 130°C until the epoxy equivalent was 850.
Subsequently, 160 parts of diethanolamine and 65 parts of ketiminated product of diethylenetriamine and methyl isobutyl ketone were added, and the mixture was reacted at 120°C for 4 hours. Thereafter, 480 g of ethylene glycol monobutyl ether was added, and the amino-group-containing epoxy resin A-la solution (solids content: 80%) obtained in Production Example a1 above was used as an amino-group-containing epoxy resin A-lb.

Production of Blocked Polyisocyanate Compound

Production Example b2

270 parts of Cosmonate M-200 (trade name, crude MDI, produced by Mitsui Chemicals, Inc., NCO group content = 31.3%) and 127 parts of methyl isobutyl ketone were placed in a reaction vessel, followed by heating to 70°C. 236 parts of ethylene glycol monobutyl ether was added thereto dropwise over a period of 1 hour, and the mixture was heated to 100°C. While maintaining this temperature, sampling was performed over time. Then, no absorption by unreacted isocyanate groups was confirmed by infrared spectroscopy, thus obtaining a blocked polyisocyanate B-1b having a resin solids content of 80%.

Production of Resin for Pigment Dispersion

Production Example b3

A quaternary-ammonium-base-containing resin for pigment dispersion (solids content: 60%) was obtained by the method described in Production Example a5 above.

Production of Modified Imidazole

Production Examples b4 to b10: Production of modified imidazoles C-1b to C-7b
The modified imidazoles C-1a to C-7a obtained by the method described in Production Examples a6 to 12 above were respectively used as the modified imidazoles C-1b to C-7b.

Production of Pigment Dispersion Paste

Production Example b11

The pigment dispersion paste P-1a obtained in Production Example a13 above was used as a pigment dispersion paste P-1b.

Production Examples b12 to b27.

Pigment dispersion pastes P-2b to 17b having a solids content of 55% were obtained in the same manner as in Production Example a13, except that the formulations were as shown in Table 3 below.

Table 3

| Production Example for pigment dispersion paste | | b11 | b12 | b13 | b14 | b15 | b16 | b17 | b18 | b19 | b20 | b21 | b22 | b23 | b24 | b25 | b26 | b27 |
|---|---|---|---|---|---|---|---|---|---|---|---|---|---|---|---|---|---|---|
| Pigment dispersion paste | | P-1b | P-2b | P-3b | P-4b | P-5b | P-6b | P-7b | P-8b | P-9b | P-10b | P-11b | P-12b | P-13b | P-14b | P-15b | P-16b | P-17b |
| Clay: content | | 5 | 5 | 5 | 5 | 5 | 5 | 5 | 7 | 7.5 | 8 | 5 | 5 | 5 | 5 | 5 | 7 | 7 |
| (C) | Modified imidazole: type | C-1b | C-2b | C-3b | C-4b | C-5b | C-5b | C-6b | C-6b | C-6b | C-6b | C-6b | C-7b | C-7b | C-9b | C-8b | | C-1b |
| | Modified imidazole: amount | 2 | 2 | 2 | 2 | 2 | 2 | 2 | 1 | 0.5 | 0.5 | 2 | 2 | 2 | 2 | 2 | | 2 |
| (D) | Zinc oxide: amount | | | | | | 2 | | | | | 2 | | 2 | 2 | 2 | 2 | |
| | Bismuth hydroxide: amount | 2 | 2 | 2 | 2 | 2 | | 2 | 1 | 1 | 0.5 | | 2 | | | | | |

The amounts shown in the table are all amounts of active ingredients.
In the table, C-8b and C-9b are the following compounds:

C-8b: 1,3-dimethylimidazolium chloride (produced by Tokyo Chemical Industry Co., Ltd., water-soluble); and
C-9b: dioctyltin oxide (tin-based catalyst).

Production of Cationic Electrodeposition Paint

Example b1

87.5 parts (solids content: 70 parts) of the amino-group-containing epoxy resin A-lb obtained in Production Example b1 and 37.5 parts (solids content: 30 parts) of the blocked polyisocyanate compound B-1b obtained in Production Example b2 were mixed, and 13 parts of 10% acetic acid was further added to the mixture. After the mixture was uniformly stirred, deionized water was added dropwise with vigorous stirring over a period of about 15 minutes to obtain an emulsion having a solids content of 34%. Thereafter, 294 parts (solids content: 100 parts) of the emulsion obtained above, 52.4 parts of the pigment dispersion paste P-1b obtained in Production Example b11, and 350 parts of deionized water were added thereto to thus obtain a cationic electrodeposition paint X-1b having a solids content of 20%.

Examples b2 to b15 and Comparative Examples b1 to b4

Cationic electrodeposition paints X-2b to 19b were produced in the same manner as in Example b1, except that the formulations were as shown in Table 4 below.
The table also shows the results of the evaluation tests described below (curability, appearance, corrosion resistance). The paint (X-16b) containing dioctyltin oxide was at a passing level according to the evaluation results; however, this paint did not contain a modified imidazole according to the present invention, and was evaluated as failing in terms of environmental aspects (toxic); thus, the paint was taken as a Comparative Example.

Table 4

| Example and Comparative Example | | Example | | | | | | | | | | | | | | | Comparative Example | | | |
|---|---|---|---|---|---|---|---|---|---|---|---|---|---|---|---|---|---|---|---|---|
| | | b1 | b2 | b3 | b4 | b5 | b6 | b7 | b8 | b9 | b10 | b11 | b12 | b13 | b14 | b15 | b1 | b2 | b3 | b4 |
| Cationic electrodeposition paint | | X-1b | X-2b | X-3b | X-4b | X-5b | X-6b | X-7b | X-8b | X-9b | X-10b | X-11b | X-12b | X-13b | X-14b | X-15b | X-16b | X-17b | X-18b | X-19b |
| (A) | Amino-group-containing epoxy resin (A-1b) | 70 parts | 70 parts | 70 parts | 70 parts | 70 parts | 70 parts | 70 parts | 70 parts | 70 parts | 70 parts | 70 parts | 70 parts | 60 parts | 80 parts | 70 parts | 70 parts | 70 parts | 70 parts | 70 parts |
| (B) | Blocked polyisocyanate (B-1b) | 30 parts | 30 parts | 30 parts | 30 parts | 30 parts | 30 parts | 30 parts | 30 parts | 30 parts | 30 parts | 30 parts | 30 parts | 40 parts | 20 parts | 30 parts | 30 parts | 30 parts | 30 parts | 30 parts |
| Pigment dispersion paste | | P-1b | P-2b | P-3b | P-4b | P-5b | P-6b | P-7b | P-8b | P-9b | P-10b | P-11b | P-12b | P-12b | P-12b | P-13b | P-14b | P-15b | P-16b | P-17b |
| Evaluation results | Curability (170°C) | A | A | A | A | A | A | A | A | A | A | A | A | A | A | A | A | B | B | A |
| | Curability (150°C) | B | B | B | B | A | A | A | A | A | B | A | A | A | A | A | B | B | C | B |
| | Appearance (baked at 150°C) | B | B | A | S | S | S | S | S | S | S | S | S | S | S | S | S | C | S | B |
| | Corrosion resistance (baked at 150°C) | B | B | B | A | A | B | A | A | A | B | B | A | A | B | B | A | C | C | C |

The amounts of the resins in the table are all values based on solids content.

Production of Test Plates

Each of the cationic electrodeposition paints obtained in the Examples and Comparative Examples was applied by electrodeposition to cold-rolled steel plate substrates (150 mm (length) × 70 mm (width) × 0.8 mm (thickness)) that had been chemical-conversion-treated with Palbond #3020 (trade name, produced by Nihon Parkerizing Co., Ltd., a zinc phosphate treatment agent) so that the dry film thickness was 17 μm. The resulting films were dried by baking at 150°C or 170°C for 20 minutes to obtain test plates (two different plates).

Appearance (Surface Roughness), Curability (Gel Fraction), and Corrosion Resistance (Baked at 150°C)

The appearance, curability, and corrosion resistance of each test plate were evaluated according to the methods described in the "Appearance (Surface Roughness)" section, the "Curability (Gel Fraction)" section, and the "Corrosion Resistance (Baked at 150°C)" section above.

**Claims**

1. A cationic electrodeposition paint composition comprising an amino-group-containing epoxy resin (A), a blocked polyisocyanate compound (B), and a modified imidazole (C) represented by the following Formula (1):

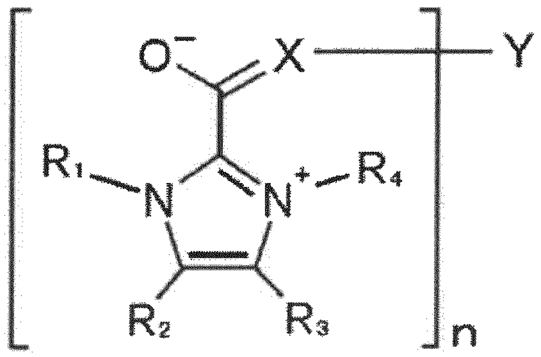

· · · Formula (1)

wherein $R_1$, $R_2$, $R_3$, and $R_4$ may be identical or different, and each represents a hydrogen atom or an organic group containing one or more carbon atoms, wherein the organic group may contain at least one member selected from the group consisting of oxygen, nitrogen, sulfur, and halogen, and two or more of $R_1$, $R_2$, $R_3$, and $R_4$, taken together with the carbon and/or nitrogen to which they are attached, may form a ring; and
X represents oxygen or nitrogen, and when X represents oxygen, Y is absent while n is 1, and when X represents nitrogen, Y represents an organic group while n is an integer of 1 or more, wherein the cationic electrodeposition paint composition satisfies the following (i) or (ii), or both:

(i) the cationic electrodeposition paint composition further comprises a rust inhibitor (D) or
(ii) a blocking agent (b-2) of the blocked polyisocyanate compound (B) is an oxime-based compound (b-2-1) and/or a pyrazole-based compound (b-2-2).

2. The cationic electrodeposition paint composition according to claim 1, wherein the modified imidazole (C) is present in an amount of 0.01 to 10 mass% based on the total resin solids content of the cationic electrodeposition paint composition.

3. The cationic electrodeposition paint composition according to claim 1, wherein the rust inhibitor (D) is present in an amount of 0.01 to 10 mass% based on the total resin solids content of the cationic electrodeposition paint composition.

4. A method for producing a coated article, the method comprising the step of immersing a metal substrate in an electrodeposition paint bath comprising the cationic electrodeposition paint composition of claim 1 to perform electrodeposition coating.

5. The method according to claim 4, the method comprising the step of thermally curing a coating film obtained by electrodeposition coating.

6. The method according to claim 5, wherein the thermal-curing step is performed at a temperature of 130°C or lower.

**INTERNATIONAL SEARCH REPORT**

International application No.
PCT/JP2020/012049

A. CLASSIFICATION OF SUBJECT MATTER
Int. Cl. B05D3/10(2006.01)i, C09D5/44(2006.01)i, C09D163/00(2006.01)i, C09D175/02(2006.01)i, B32B15/092(2006.01)i, C09D7/63(2018.01)i
FI: C09D175/02, C09D5/44 A, C09D7/63, B32B15/092, B05D3/10 P, C09D163/00
According to International Patent Classification (IPC) or to both national classification and IPC

B. FIELDS SEARCHED
Minimum documentation searched (classification system followed by classification symbols)
Int. Cl. B05D3/10, C09D5/44, C09D163/00, C09D175/02, B32B15/092, C09D7/63

Documentation searched other than minimum documentation to the extent that such documents are included in the fields searched
Published examined utility model applications of Japan 1922-1996
Published unexamined utility model applications of Japan 1971-2020
Registered utility model specifications of Japan 1996-2020
Published registered utility model applications of Japan 1994-2020

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| A | JP 6-200194 A (KANSAI PAINT CO., LTD.) 19 July 1994 | 1-6 |
| A | WO 2015/087932 A1 (KANSAI PAINT CO., LTD.) 18 June 2015 | 1-6 |
| A | JP 2017-155203 A (KOEI CHEMICAL CO.) 07 September 2017 | 1-6 |
| A | WO 2009/135600 A1 (BAYER MATERIALSCIENCE AG.) 12 November 2009 | 1-6 |
| A | WO 2014/187782 A1 (DEUTSCHE INSTITUTE FUR TEXTILUND FASERFORSGHUNG DENKENDORF) 27 November 2014 | 1-6 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 15.05.2020 | 26.05.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2020/012049

C (Continuation). DOCUMENTS CONSIDERED TO BE RELEVANT

| Category* | Citation of document, with indication, where appropriate, of the relevant passages | Relevant to claim No. |
|---|---|---|
| A | BANTU, Bhasker et al., CO2, Magnesium, Aluminum, and Zinc Adducts of N-Heterocyclic Carbenes as (Latent) Catalysts for Polyurethane Synthesis, European Journal of Inorganic Chemistry, 2009, no. 13, pp. 1970-1976, all drawings | 1-6 |
| A | COUTELIER, Olivier et al., N-HETEROCYCLIC CARBENE-CATALYZED SYNTHESIS OF POLYURETHANES, Polymer Preprints, 2011, vol. 52, no. 2, pp. 290-291, all drawings | 1-6 |
| A | JP 8-120222 A (NIPPON POLYURETHANE INDUSTRY CO., LTD.) 14 May 1996 | 1-6 |
| A | JP 2014-80569 A (KANSAI PAINT CO., LTD.) 08 May 2014 | 1-6 |
| P, A | WO 2019/066029 A1 (KANSAI PAINT CO., LTD.) 04 April 2019 | 1-6 |
| P, A | WO 2019/065953 A1 (KOEI CHEMICAL CO.) 04 April 2019 | 1-6 |

Form PCT/ISA/210 (continuation of second sheet) (January 2015)

**INTERNATIONAL SEARCH REPORT**
Information on patent family members

International application No.
PCT/JP2020/012049

| Patent Documents referred to in the Report | Publication Date | Patent Family | Publication Date |
|---|---|---|---|
| JP 6-200194 A | 19.07.1994 | (Family: none) | |
| WO 2015/087932 A1 | 18.06.2015 | CN 105792947 A | |
| JP 2017-155203 A | 07.09.2017 | (Family: none) | |
| WO 2009/135600 A1 | 12.11.2009 | (Family: none) | |
| WO 2014/187782 A1 | 27.11.2014 | EP 2999730 A1 | |
| JP 8-120222 A | 14.05.1996 | (Family: none) | |
| JP 2014-80569 A | 08.05.2014 | TW 201425485 A | |
| WO 2019/066029 A1 | 04.04.2019 | (Family: none) | |
| WO 2019/065953 A1 | 04.04.2019 | TW 201920118 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2019065671 A
- JP 2019066339 A
- JP 2000290542 A
- JP 2012152725 A
- JP H10120947 A
- JP H07300698 A
- US 3984299 A
- US 4017438 A
- JP S59043013 A
- JP H08337750 A